# EUROPEAN PATENT SPECIFICATION

(11) **EP 4 651 431 B1**
(45) Date of publication and mention of the grant of the patent: **21.10.2026**
(21) Application number: 25175249.9
(22) Date of filing: 09.05.2025
(51) Int. Cl.: H04L 9/32, G06F 21/62, G06F 21/33

(54) **VERIFICATION SYSTEM AND VERIFICATION METHOD**
VERIFIZIERUNGSSYSTEM UND VERIFIZIERUNGSVERFAHREN
SYSTÈME ET PROCÉDÉ DE VÉRIFICATION

(30) Priority: 16.05.2024 JP 2024080028
(43) Date of publication of application: 19.11.2025
(73) Proprietor: Hitachi, Ltd., Tokyo 100-8280 (JP)
(72) Inventor: KATAYAMA, Kento, Tokyo, 1008280 (JP); IKEDA, Manami, Tokyo, 1008280 (JP); ANZAI, Kosuke, Tokyo, 1008280 (JP); WAKABAYASHI, Masaki, Tokyo, 1008280 (JP); FUJISHIRO, Takahiro, Tokyo, 1008280 (JP); NISHIKAWA, Yukihiro, Tokyo, 1008280 (JP); OGAWA, Masami, Tokyo, 1008280 (JP)
(74) Representative: MERH-IP Matias Erny Reichl Hoffmann Patentanwälte PartG mbB

(56) References cited:
- EP-A1- 4 539 388
- WO-A1-2024/038630
- CN-A- 117 675 222

## Description

### BACKGROUND OF THE INVENTION

### 1. Field of the Invention

The present invention generally relates to a technology for verifying certificate information while protecting the privacy of a user.

### 2. Description of the Related Art

In identity management, an idea of Self-Sovereign Identity (SSI) in which an individual controls his/her own identity without intervention of a management entity has attracted attention in recent years. In particular, in a use case where privacy protection of an individual is regarded as important, introduction of identity management based on SSI is expected. As elemental technologies for realizing SSI, there are Decentralized Identifiers (DIDs) and Verifiable Credentials (VCs).

From the viewpoint of privacy protection and availability, there is an authorization system utilizing a VC as an example of a verifiable certificate. For example, a general authorizing system using a VC is formed by including an Issuer, a Holder, a Verifier, and a Verifiable Data Registry (VDR).

In the VC, attribute information of a user who uses the Holder requesting authorization from the Verifier is described, and when the Verifier receives a Verifiable Presentation (VP) including a single or a plurality of VCs from the Holder, authorization is performed based on the attribute information described in the VP. At this time, before performing authorization determination, the Verifier needs to verify whether the presented VP and the VC group included in the VP are valid.

In authorization utilizing a general certificate, a verification server for reducing a burden on a Verifier related to verification has been proposed (see JP 2009-205230 A). For example, JP 2009-205230 A discloses a basic function of the verification server.
WO 2024038630 A1 discloses an authentication system and an authentication method that perform personal authentication and certification processing of personal attribute information.
CN 117675222 A discloses a privacy protection method for decentralized digital identity, and, in particular, to a zero-knowledge proof method and device for user attributes for decentralized identity.

In addition, there has been proposed a format of a VC that can be selectively presented and a method for presenting the VC for the Holder to pass only attribute information desired to be presented to the Verifier and conceal the other information (see Daniel Fett and two others, "Selective Disclosure for JWTs (SD-JWT)", [online], March 4, 2024, IETF Datatracker, [searched on April 23, 2024], Internet <URL: https://datatracker.ietf.org/doc/draft-ietf-oauth-selective-disclosure-jwt/>). For example, "Selective Disclosure for JWTs (SD-JWT)", [online], March 4, 2024, IETF Datatracker, [searched on April 23, 2024], Internet <URL: https://datatracker.ietf.org/doc/draft-ietf-oauth-selective-disclosure-jwt/>) defines a VC format for selectively presenting only free-selected attribute information called Selective Disclosure JWT (SD-JWT).

### SUMMARY OF THE INVENTION

There are various data formats in the VC issued by the Issuer, and there is a problem that verification cannot be performed while protecting the privacy of the user in the verification server. In JP 2009-205230 A, the verification server does not support various formats, and the privacy of the user cannot be protected. In "Selective Disclosure for JWTs (SD-JWT)", [online], March 4, 2024, IETF Datatracker, [searched on April 23, 2024], Internet <URL: https://datatracker.ietf.org/doc/draft-ietf-oauth-selective-disclosure-jwt/>), the privacy of the user at the time of verification can be protected, but a format (data format) of the VC is limited.

The present invention has been made in view of the above points, and an object of the present invention is to propose a verification system or the like that verifies certificate information in various formats while protecting the privacy of a user.

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. In the present invention, to solve the above-described problem, provided is a verification system that verifies certificate information including attribute information indicating an attribute of a user and information for verification related to verification of a qualification of the user, the verification system including a specifying unit that specifies a format of the certificate information, an extraction unit that extracts the information for verification from the certificate information based on a result of specification performed by the specifying unit, a concealment unit that conceals a predetermined portion including the attribute information of the certificate information to generate concealed attribute information, and/or a verification unit that performs verification based on the information for verification extracted by the extraction unit and the concealed attribute information generated by the concealment unit.

In the above configuration, the information for verification extracted according to the format of the certificate information and the concealed attribute information in which the attribute information is concealed instead of the attribute information of the user are used for verification, and thus, for example, it is possible to verify certificate information in various formats while protecting the privacy of the user.

The present invention can realize a highly confidential verification system. Problems, configurations, and effects other than those described above will be clarified by the following description of the embodiments.

### BRIEF DESCRIPTION OF THE DRAWINGS

Fig. 1 is a diagram illustrating an example of a verification system according to a first embodiment;
Fig. 2 is a diagram illustrating an example of components of the verification system according to the first embodiment;
Fig. 3 is a diagram illustrating an example of a software configuration of an Issuer according to the first embodiment;
Fig. 4 is a diagram illustrating an example of a software configuration of a Holder according to the first embodiment;
Fig. 5 is a diagram illustrating an example of a software configuration of a Verifier according to the first embodiment;
Fig. 6 is a diagram illustrating an example of a software configuration of a verification server according to the first embodiment;
Fig. 7 is a diagram illustrating an example of a configuration of a VDR according to the first embodiment;
Fig. 8 is a diagram illustrating an example of processing with respect to a VC according to the first embodiment;
Fig. 9 is a diagram illustrating an example of processing with respect to a VP according to the first embodiment;
Fig. 10 is a diagram illustrating an example of verification information extraction processing and concealment processing according to the first embodiment;
Fig. 11 is a diagram illustrating an example of verification in the verification server according to the first embodiment;
Fig. 12 is a diagram illustrating an example of a sequence chart according to the first embodiment;
Fig. 13 is a diagram illustrating an example of a software configuration of a Holder according to a second embodiment;
Fig. 14 is a diagram illustrating an example of a user interface according to the second embodiment;
Fig. 15 is a diagram illustrating an example of a software configuration of a Verifier according to the second embodiment;
Fig. 16 is a diagram illustrating an example of a sequence chart according to the second embodiment;
Fig. 17 is a diagram illustrating an example of a software configuration of a Holder according to a third embodiment; and
Fig. 18 is a diagram illustrating an example of a sequence chart according to the third embodiment.

### DESCRIPTION OF THE PREFERRED EMBODIMENTS

### (I) First embodiment

Hereinafter, an embodiment of the present invention will be described. The present invention is not limited to the embodiment.

The present embodiment is a verification system that verifies a Verifiable Presentation (VP) including a single or a plurality of Verifiable Credentials (VCs), and the verification system includes an Issuer, a Holder, an Agent, a verification server, and a Verifier.

The Issuer has a function of creating and issuing a VC of a user. The Holder has a function of holding the VC issued by the Issuer and outputting a VP including a single or a plurality of VCs requested from the Verifier. The Agent has a function of generating verification data from the VP output by the Holder and passing the generated verification data to the verification server. The verification server is a computer in charge of a verification function of the Verifier, and has a function of verifying the VP based on the verification data received from the Agent. The verification of the VP includes at least one of signature verification, revocation verification, and validity verification for at least one of the VP and the single or the plurality of VCs included in the VP. The Verifier has a function of performing processing related to the user (providing a service or the like to the user) based on the verification result provided by the verification server.

For example, the Issuer issues a VC including attribute information of the user. The attribute information is personal information such as a name, an age, a gender, and an address, qualification information indicating a qualification acquired by the user, and the like. The Holder (for example, the user's smartphone) holds the VC issued by the Issuer. When the Holder requests the Verifier (for example, a cash register terminal of a convenience store) to provide a service (for example, sale of alcoholic beverages), and a single or a plurality of VCs (for example, a driver's license VC) including attribute information (for example, date of birth) of the user necessary for determining authorization of the provision of the service is requested from the Verifier, the Holder passes the VP including the VC to the Agent. For example, the Agent is provided in the Holder or the Verifier. The Agent generates verification data for the VP (VP verification data), specifies each format of the VC group included in the VP to generate verification data for each VC (VC verification data), and passes the VP verification data and each VC verification data to the verification server. Hereinafter, the VP verification data and the VC verification data may be collectively referred to as verification data. The verification server verifies the VP and the VC group based on the verification data. The Verifier performs authorization determination based on a verification result provided by the verification server and attribute information included in the VP, and provides a service (for example, confirming that the driver's license VC is valid and the age of the user is an age at which the sale of alcoholic beverages is permitted, then sells alcoholic beverages). Here, a mode using a single VC (driver's license VC) has been exemplified, but a mode using a plurality of VCs (for example, in job hunting, a university academic transcript VC and a driver's license VC) may be used.

Notations such as "first", "second", and "third" in the present specification or the like are denoted to identify components, and they do not necessarily limit the number or order. A number for identifying a component is used for each context, and the number used in one context does not necessarily indicate the same configuration in another context. It does not prevent a component identified by a certain number from also functioning as a component identified by another number.

Next, an embodiment of the present invention will be described with reference to the drawings. The following description and drawings are examples presented for describing the present invention, and they are omitted and simplified as appropriate for clarity of description. The present invention can be implemented in various other forms. Unless otherwise specified, each component may be singular or plural.

In the following description, the same elements are denoted by the same reference numerals in the drawings, and the description thereof will be omitted as appropriate. When the same type of elements are described without being distinguished, a common portion (portion excluding a branch number) of reference numerals including a branch number is used, and when the same type of elements are described while being distinguished from each other, reference numerals including a branch number may be used. For example, when VCs 20 may be described as "VC20" when they are not particularly distinguished, and they may be described as "VC20-1", "VC20-2" and the like when individual VCs are distinguished and described.

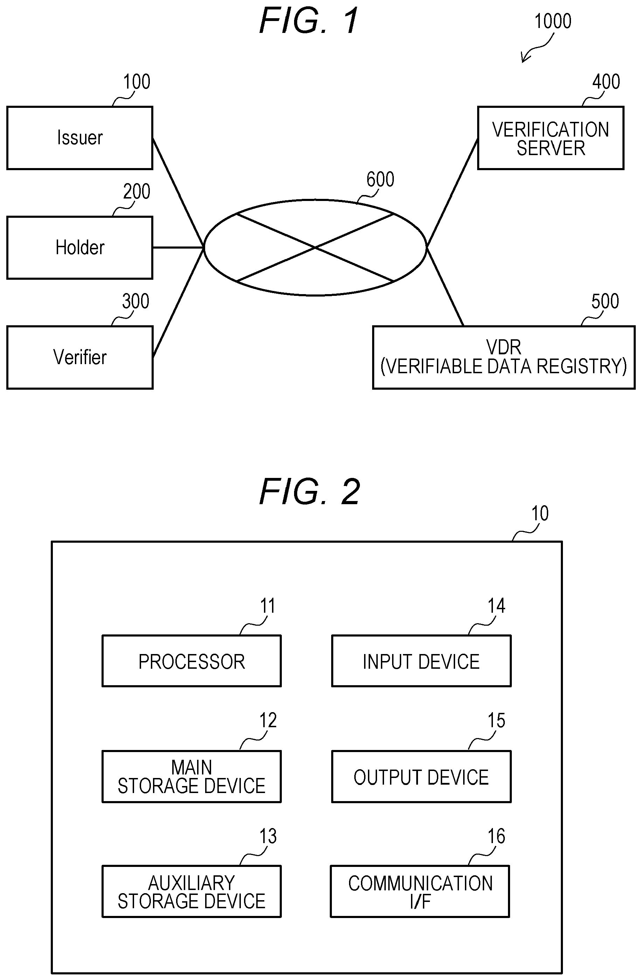

In Fig. 1, reference numeral 1000 denotes a verification system according to the first embodiment as a whole. Fig. 1 is a diagram illustrating an example of a configuration of the verification system 1000.

The verification system 1000 includes, as components thereof, an Issuer 100, a Holder 200, a Verifier 300, a verification server 400, and a VDR 500.

The Issuer 100, the Holder 200, the Verifier 300, the verification server 400, and the VDR 500 are communicably connected to each other via a network 600, and they can exchange data and the like.

The Issuer 100 is at least one computer that creates a VC including attribute information of a user who uses the Holder 200 and outputs the VC to the Holder 200. Details of the Issuer 100 will be described later.

The Holder 200 is a terminal device such as a smartphone that creates a VP in which its own electronic signature is added to the VC issued from the Issuer 100 and outputs the VP to the Verifier 300. Details of the Holder 200 will be described later.

The Verifier 300 is at least one computer that can perform authorization determination in response to a request for a service using the VP and can provide a predetermined service. The Verifier 300 extracts verification data from the VP presented from the Holder 200 and passes the verification data to the verification server 400. In addition, the Verifier receives a verification result provided by the verification server 400. Details of the Verifier 300 will be described later.

The verification server 400 is at least one computer that verifies the VP based on the verification data received from the Verifier 300. The verification server 400 passes the verification result to the Verifier 300. Details of the verification server 400 will be described later.

The VDR 500 is at least one computer that stores information related to verification of the VP. Details of the VDR 500 will be described later.

Fig. 2 is a block diagram illustrating an example of components (entities) of the verification system 1000. The Issuer 100, the Holder 200, the Verifier 300, the verification server 400, and the VDR 500 may have substantially similar configurations except that some configurations and processing speeds are different. Here, the hardware configuration of each component will be described using an entity 10 as an example.

The entity 10 is at least one computer, including a processor 11, a main storage device 12, an auxiliary storage device 13, an input device 14, an output device 15, and a communication I/F 16. The processor 11 is, for example, a central processing unit (CPU), and it executes a program. The main storage device 12 is, for example, a memory including a storage area capable of storing programs and data to be executed by the processor 11. The auxiliary storage device 13 is, for example, a cache, including a storage area in which programs and data to be stored in the main storage device 12 are temporarily stored. The input device 14 is a mouse, a keyboard, or the like that accepts an operation from the outside. The output device 15 is, for example, a display. The communication I/F 16 exchanges data and the like with the outside via the network 600.

The function of the entity 10 may be realized, for example, by the processor 11 reading a program stored in the auxiliary storage device 13 to the main storage device 12 and executing the program (software), may be realized by hardware such as a dedicated circuit, or may be realized by combining software and hardware. One function of the entity 10 may be divided into a plurality of functions, or a plurality of functions may be integrated into one function. A part of the functions of the entity 10 may be provided as another function or may be included in another function. Some of the functions of the entity 10 may be realized by another computer capable of communicating with the entity 10. Each component of the hardware of the entity 10 may be one or a plurality of components.

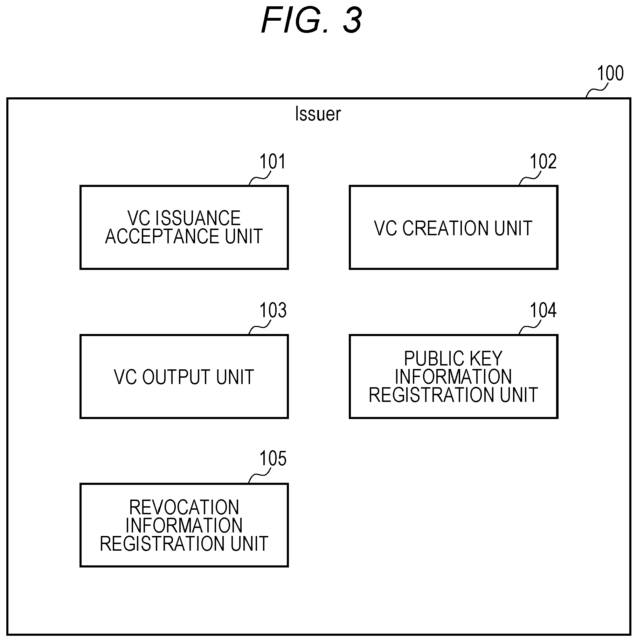

Fig. 3 is a block diagram illustrating an example of a software configuration of the Issuer 100. The Issuer 100 includes a VC issuance acceptance unit 101, a VC creation unit 102, a VC output unit 103, a public key information registration unit 104, and a revocation information registration unit 105.

The VC issuance acceptance unit 101 accepts a VC issuance request from the Holder 200. When the VC issuance acceptance unit 101 accepts the issuance request, the VC creation unit 102 creates a VC including attribute information of the user. The VC output unit 103 outputs the VC created by the VC creation unit 102 to the Holder 200. The public key information registration unit 104 registers the public key corresponding to the secret key of the Issuer 100 in the VDR 500. In the public key management using the VDR 500, the public key information registration unit 104 registers, for example, a pair of (identifier, public key). At this time, the public key information registration unit 104 may set the identifier of the Issuer 100 as a DID and register the public key associated with the DID in the VDR 500. When the public key information is written in the VC without registering the public key in the VDR 500, the public key information registration unit 104 may register nothing in the VDR 500. The revocation information registration unit 105 registers revocation information of the VC to be revoked in the VDR 500.

The VC created by the VC creation unit 102 includes verification information used for verification, and is given an electronic signature with the secret key of the Issuer 100. The verification information includes a public key identifier with which the public key corresponding to the secret key can be specified, a revocation information identifier with which the revocation information with which the revocation of the VC can be confirmed can be specified, and validity information with which the validity of the VC can be confirmed. Details of the data to be signed will be described later.

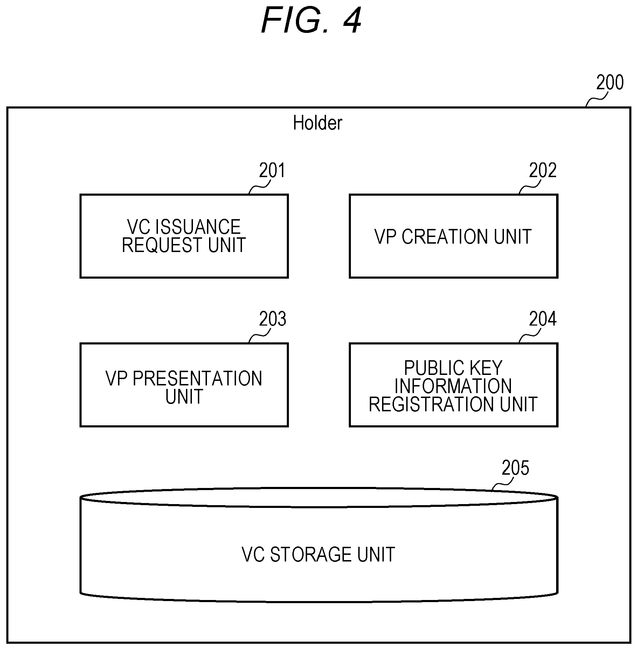

Fig. 4 is a block diagram illustrating an example of a software configuration of the Holder 200. The Holder 200 includes a VC issuance request unit 201, a VP creation unit 202, a VP presentation unit 203, a public key information registration unit 204, and a VC storage unit 205.

The VC issuance request unit 201 requests the Issuer 100 to issue a VC issuance request. The VP creation unit 202 creates a VC including attribute information of the user necessary for authorization determination of the Verifier 300 as a VP. A single or a plurality of VCs are included in the VP. The VP created by the VP creation unit 202 is given an electronic signature with the secret key of the Holder 200. The VP presentation unit 203 presents the VP created by the VP creation unit 202 to the Verifier 300.

The public key information registration unit 204 registers the public key corresponding to the secret key of the Holder 200 in the VDR 500. In the public key management using the VDR 500, the public key information registration unit 204 registers, for example, a pair of (identifier, public key). At this time, the public key information registration unit 204 may set the identifier of the Holder 200 as a DID and register the public key associated with the DID. When the public key information is written in the VC without registering the public key in the VDR 500, the public key information registration unit 204 may register nothing in the VDR 500. The VC storage unit 205 stores and manages the VC. The VC may be stored and managed in a Wallet app downloaded in the Holder 200. In this case, for example, the Holder 200 performs presentation of the VP via the Wallet app.

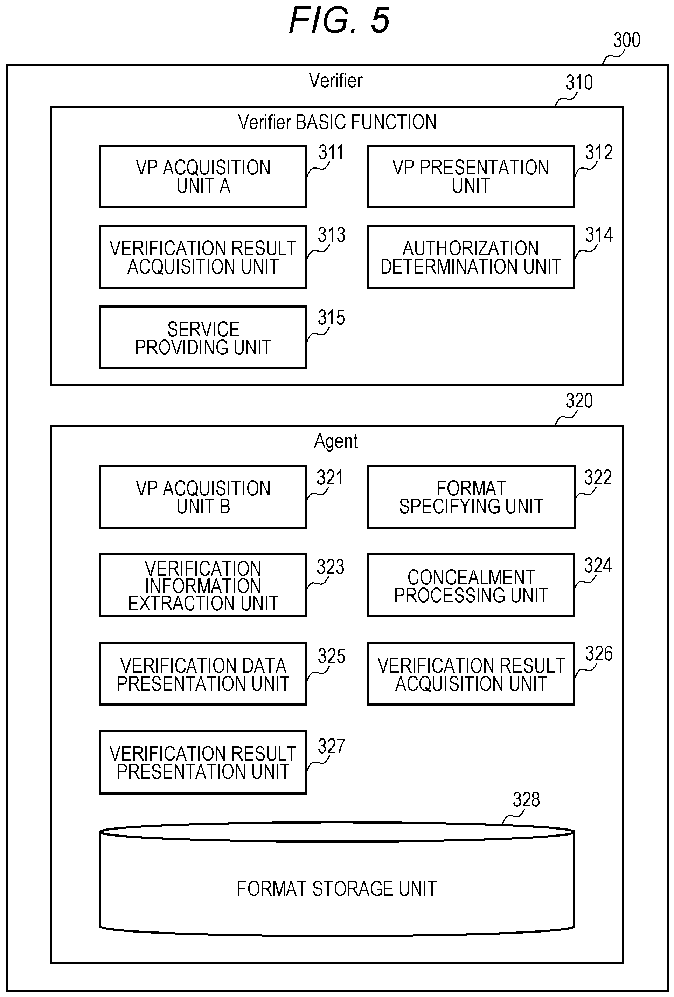

Fig. 5 is a block diagram illustrating an example of a software configuration of the Verifier 300. The Verifier 300 includes a Verifier basic function 310 and an Agent 320. The Verifier basic function 310 includes a VP acquisition unit A311, a VP presentation unit 312, a verification result acquisition unit 313, an authorization determination unit 314, and a service providing unit 315. The Agent 320 includes a VP acquisition unit B321, a format specifying unit 322, a verification information extraction unit 323, a concealment processing unit 324, a verification data presentation unit 325, a verification result acquisition unit 326, a verification result presentation unit 327, and a format storage unit 328.

The VP acquisition unit A311 acquires the VP presented from the Holder 200. The VP presentation unit 312 passes the VP to the VP acquisition unit B321 of the Agent 320. The verification result acquisition unit 313 receives a verification result from the Agent 320. The authorization determination unit 314 performs authorization determination based on the attribute information of the VC and the verification result. The service providing unit 315 provides a service according to a result of the authorization determination of the authorization determining unit 314.

The VP acquisition unit B321 acquires the VP presented from the VP presentation unit 312 of the Verifier basic function 310. The format specifying unit 322 specifies the format of the VP acquired by the VP acquisition unit B321 and each format of the VC group included in the VP. The VC format includes, for example, a JWT format, a JSON-LD format, and an SD-JWT format. The format of the VP may be the same as that of the VC, and there are a JWT format, a JSON-LD format, and an SD-JWT format.

The verification information extraction unit 323 extracts a verification information group used for verification from the VP and the VC group included in the VP based on the format specified by the format specifying unit 322. The concealment processing unit 324 performs concealment processing of concealing the attribute information based on the format specified by the format specifying unit 322. The verification data presentation unit 325 presents the data of the verification information group and the data on which the concealment processing has been performed to the verification server 400 as verification data.

The verification result acquisition unit 326 receives a verification result from the verification server 400. The verification result presentation unit 327 passes the verification result acquired by the verification result acquisition unit 326 to the authorization determination unit 314. The format storage unit 328 stores each format of the VP and the VC group, and information of a verified portion and a concealed portion corresponding to the format in association with each other. In Fig. 5, the Agent 320 includes the format storage unit 328, but the format storage unit 328 may be prepared as an external storage, and the format storage unit 328 may exchange data with the Agent 320.

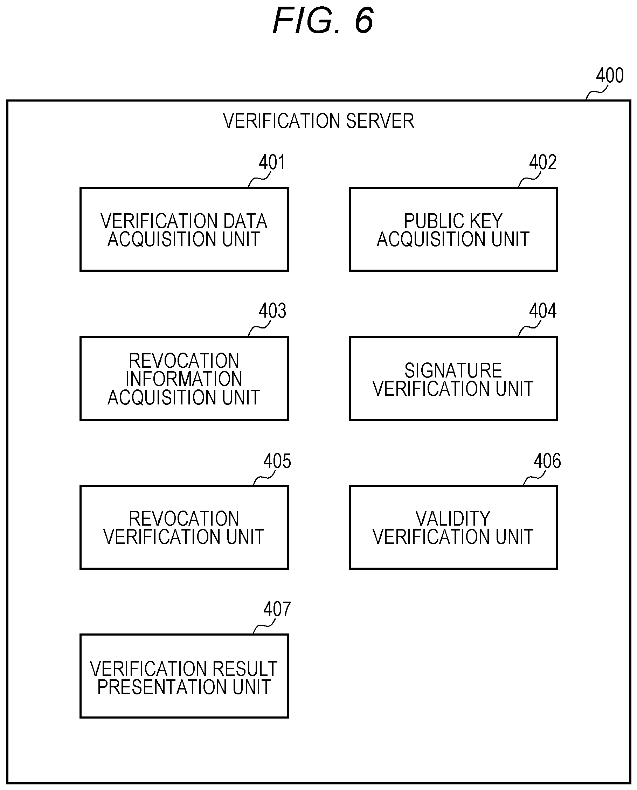

Fig. 6 is a block diagram illustrating an example of a software configuration of the verification server 400. The verification server 400 includes a verification data acquisition unit 401, a public key acquisition unit 402, a revocation information acquisition unit 403, a signature verification unit 404, a revocation verification unit 405, a validity verification unit 406, and a verification result presentation unit 407.

The verification data acquisition unit 401 receives the verification data from the Agent 320. The public key acquisition unit 402 acquires the public key of the Issuer 100 and the public key of the Holder 200 by using information (public key identifier) related to the public key included in the verification data, for example, the identifier of the Issuer 100 and the identifier of the Holder 200. For example, when acquiring the public key of the Issuer 100, the public key acquisition unit 402 acquires the public key associated with the identifier (ID_{Issuer}) of the Issuer 100 included in the verification data from the VDR 500 by using the identifier.

The revocation information acquisition unit 403 acquires the revocation information by using revocation specifying information (in this example, a revocation information identifier) regarding the revocation of the VC included in the verification data. For example, the revocation information acquisition unit 403 acquires revocation information associated with the identifier (ID_{VC}) of the VC from the VDR 500. The revocation information acquisition unit 403 may acquire the revocation information of the VC by inquiring the Issuer 100.

The signature verification unit 404 performs signature verification between the VP and the VC group included in the VP using the verification data acquired by the verification data acquisition unit 401 and the public key acquired by the public key acquisition unit 402. For example, when the format of the VC is a JSON Web Token (JWT) format, the signature verification unit 404 receives the hash value of the header and the payload of the VC and the signature from the verification data acquisition unit 401, decrypts the signature with the public key associated with the ID_{Issuer} of the Issuer 100 that has issued the VC, and confirms that consistency with the hash value is obtained. At this time, when consistency can be confirmed, the signature verification unit 404 can confirm that signature verification is successful and there is no impersonation, falsification, or the like.

The revocation verification unit 405 performs revocation verification of the VP and the VC group included in the VP using the revocation information acquired by the revocation information acquisition unit 403. For example, the revocation verification unit 405 can check whether the VC has been revoked by the revocation information acquisition unit 403 acquiring the revocation information associated with the identifier (ID_{VC}) of the VC from the VDR 500.

The validity verification unit 406 performs validity verification between the VP and the VC group included in the VP using the verification data acquired by the verification data acquisition unit 401. For example, in a case of a VC for which a valid period is set, the validity verification unit 406 can confirm that the VC is valid when it can be confirmed that the start date of the valid period has passed and that the end date of the valid period has not passed.

The verification result presentation unit 407 presents the verification results in the signature verification, the revocation verification, and the validity verification to the Agent.

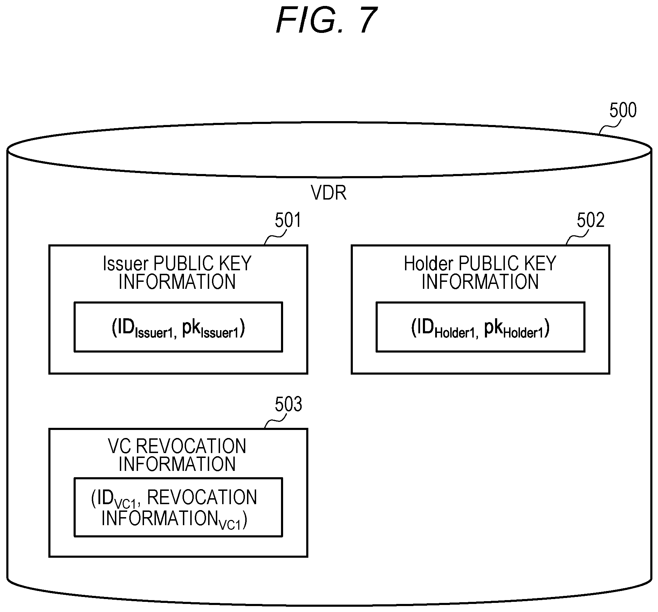

Fig. 7 is a block diagram illustrating an example of a configuration of the VDR 500. The VDR 500 stores, for example, public key information of the Issuer 100 (Issuer public key information 501), public key information of the Holder 200 (Holder public key information 502), and revocation information of the VC (VC revocation information 503).

Here, a method for managing the Issuer public key information 501 will be described. When the identifier of the Issuer 100 is represented as ID_{Issuer1}, and the public key of the Issuer 100 is represented as pk_{Issuer1}, management is performed in the form of (ID_{Issuer1}, pk_{Issuer1}), for example. As a method for managing the Holder public key information 502, management is performed in a form similar to that for the Issuer 100. When the identifier of the Holder 200 is represented as ID_{Holder1}, and the public key of the Holder 200 is represented as pk_{Holder1}, management is performed in the form of (ID_{Holder1}, pk_{Holder1}), for example. An example of the identifier of the Issuer 100 and the identifier of the Holder 200 is a DID.

As a method for managing the VC revocation information 503, when the identifier of the issued VC is represented as ID_{VC1}, and the revocation information is represented as revocation information_{VC1}, management is performed in the form of (ID_{VC1}, revocation information_{VC1}), for example.

Other pieces of information such as validity information of the VC, validity information of the VP, and revocation information of the VP may be stored in the VDR 500 similarly to the VC revocation information 503.

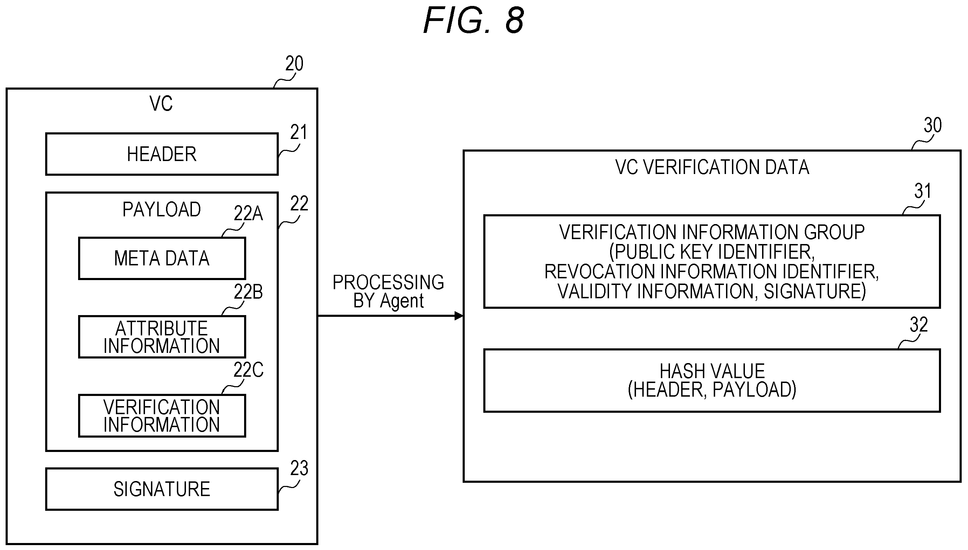

Fig. 8 is a diagram illustrating an example of processing with respect to the VC performed by the Agent 320. Here, a VC 20 will be described as an example. For example, when the format of the VC 20 is a JWT format, the VC 20 includes three elements of a header 21, a payload 22, and a signature 23. The JWT is obtained by encoding these three elements with Base64URL.

In the header 21, the type of token and the signature algorithm to be used are described. In the payload 22, metadata 22A, attribute information 22B, and verification information 22C are described. In the signature 23, a hash value of the header 21 and the payload 22 is described as a value signed with the secret key of the Issuer 100.

When the VC 20 is presented to the verification server 400 as it is without being processed by the Agent 320, the payload 22 including the attribute information 22B is decoded at the time of verification of the VC 20. Thus, the verification server 400 can view the content of the attribute information 22B. As a result, the privacy of the user is violated.

The concealment processing unit 324 of the Agent 320 performs concealment processing, that is, generates a hash value of the header 21 and the payload 22 including the attribute information 22B, whereby a value having unidirectionality is obtained, and the content of the attribute information 22B is concealed.

The verification information extraction unit 323 of the Agent 320 extracts the public key identifier, the revocation information identifier, and the validity information from the verification information 22C and extracts the signature 23 from the VC 20. Here, the public key identifier, the revocation information identifier, the validity information, and the signature 23 extracted from the VC 20 by the verification information extraction unit 323 are a verification information group 31, which are an example of the verification information group. A hash value 32 is obtained by hashing the header 21 and the payload 22 with the concealment processing unit 324, which is an example of the hash value. A combination of the verification information group 31 and the hash value 32 is a VC verification data 30, which is an example of the VC verification data. The Agent 320 manages the VC verification data in the form of (hash value, verification information group). The verification server 400 can correctly verify the VC by using the VC verification data.

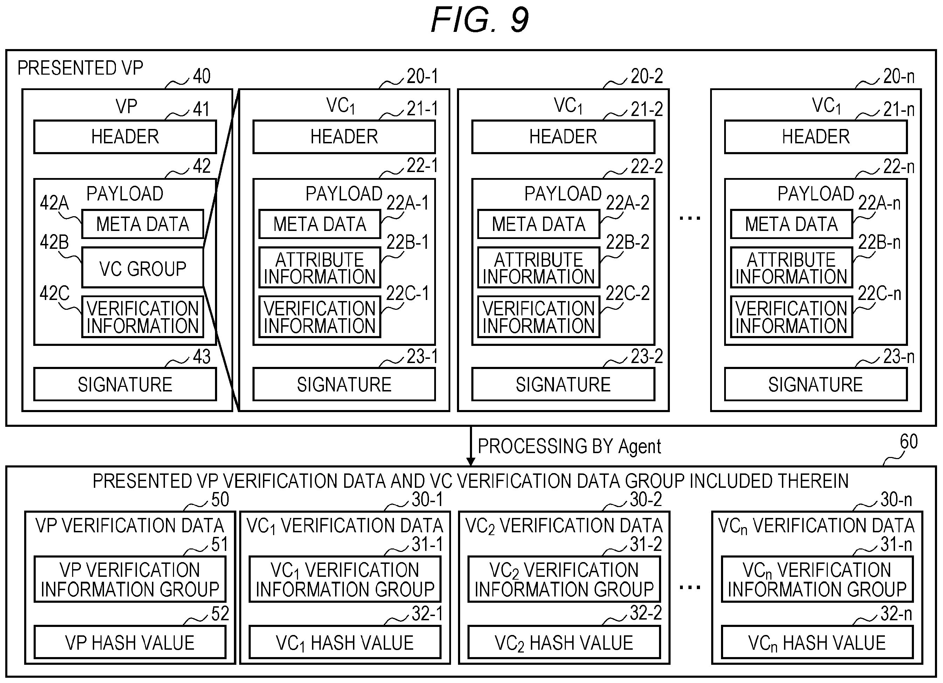

Fig. 9 is a diagram illustrating an example of processing with respect to the VP performed by the Agent 320. Here, a VP 40 will be described as an example. As the configuration of the VP 40, for example, when the format of the VP 40 is a JWT format, the VP 40 includes three elements of a header 41, a payload 42, and a signature 43. In the header 41, the type of token and the signature algorithm to be used are described. In the payload 42, metadata 42A, a VC group 42B, and verification information 42C are described. In the signature 43, a hash value of the header 41 and the payload 42 is described as a value signed with the secret key of the Holder 200.

The Agent 320 extracts VP verification data 50 of the VP 40 and the VC verification data 30 for each VC 20 included in the VP 40 from the VP 40. A combination of the verification information data 50 and the VC verification data 30 is a VC verification data 60, which is an example of the VC verification data. The verification data includes a set of (hash value, verification information group) and is output by the number of VCs included in the VP.

In other words, the VP verification data 50 includes a VP verification information group 51 and a VP hash value 52. Although not illustrated, the VP verification information group 51 includes a public key identifier with which the public key corresponding to the secret key of the Holder 200 can be specified, a revocation information identifier with which revocation information of the VP can be specified, validity information of the VP, and the signature 43. The VP hash value 52 includes a value obtained by hashing the header 41 and the payload 42.

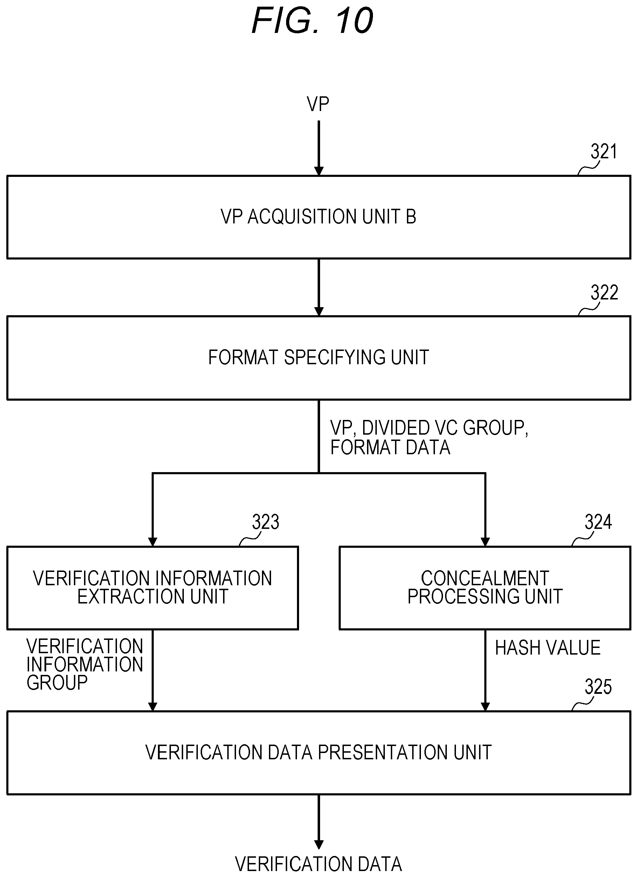

Fig. 10 is a diagram illustrating an example of verification information extraction processing and concealment processing of the Agent 320.

When the VP acquisition unit B321 receives the VP, the VP acquisition unit passes the VP to the format specifying unit 322.

For the VP, the format specifying unit 322 divides the VP into VC groups and specifies the format of the VP and each format of the divided VC groups. Next, the format specifying unit 322 acquires the format specifying data from the format storage unit 328. In the format specifying data, format specifying information, concealed portion information, and verified portion information in various formats are managed in the form of (format information, format specifying information, concealed portion information, verified portion information). The format specifying information indicates information used to specify the format, the concealed portion information indicates a portion that needs to be concealed, and the verified portion information indicates portions of the verification information and the signature. The same applies to the VP, and the description thereof will be omitted.

For example, when the VC format is a JWT format, the VC format is specified by whether "jwt" is described in "typ" which is an item of the header of the data format. The format specifying unit 322 refers to the format specifying information, determines that "typ" = "jwt", and specifies that the format is a JWT format. The format specifying unit 322 specifies the format in a brute-force manner with reference to the format specifying information also in the format of the VP and the format of another VC. When the format is a JWT format, the concealed portion is the header and the payload including attribute information. The verified portion is an algorithm described in the header of the JWT, a public key identifier, a revocation information identifier, and validity information described in the payload, and a character string after being signed with the secret key described in the signature.

First, the format specifying unit 322 specifies the format of the VP and the format of the VC. Next, the format specifying unit 322 specifies the concealed portion and the verified portion corresponding to the format for the VP and the divided VC group using the format specifying data. At this time, the format specifying unit 322 generates format data (format, concealed portion, and verified portion) corresponding to each of the VP and the VC group by using the format specifying data acquired from the format storage unit 328, and passes the VP, the VC group, and the format data to the verification information extraction unit 323 and the concealment processing unit 324. As a result, for example, even when different formats of VCs are included in the VP, the determination of the format of a VC, the concealment processing of the VC, and the extraction of the verification information group of the VC are appropriately performed for each VC.

The verification information extraction unit 323 extracts a verification information group in the VP and VC groups based on the format data generated by the format specifying unit 322. At this time, the verification information extraction unit 323 extracts the public key identifier, the revocation information identifier, the validity information, and the signature as the verification information group.

The concealment processing unit 324 performs concealment processing by using the format data generated by the format specifying unit 322. For example, when the format of the VC is JWT, the hash value necessary for signature verification is a hash value of the header and the payload. That is, when the VC format is JWT, the concealed portion is the header and the payload.

The public key identifier and the signature extracted by the verification information extraction unit 323 are used for signature verification in the verification server 400. In general signature verification, the public key, the signature, and the hash value of data corresponding to the signature are required. For example, when the format of the VC is JWT, the verification server 400 uses the public key, the signature, and the hash value of the header and the payload in signature verification. When the public key is stored in the VDR 500, the verification information extraction unit 323 extracts the identifier of the Issuer 100 so that the verification server 400 can acquire the public key associated with the identifier from the VDR 500. When the VC includes the public key, the verification information extraction unit 323 extracts the public key as it is.

The revocation information identifier extracted by the verification information extraction unit 323 is used for revocation verification in the verification server 400. The revocation information identifier is, for example, the identifier of the VC. When the revocation information is stored in the VDR 500, the verification information extraction unit 323 extracts the identifier of the VC (ID_{VC}) so that the verification server 400 can acquire the revocation information associated with the VC from the VDR 500.

The verification information extracted by the verification information extraction unit 323 is used for validity verification in the verification server 400. For example, when a valid period is set in the VC, the verification information extraction unit 323 extracts the valid period, and the verification server 400 can verify the valid period by comparing the valid period with the date and time at the time of presentation of the VC.

The processing order of the verification information extraction unit 323 and the concealment processing unit 324 may be performed in parallel as illustrated in Fig. 10, or either may be performed first. In the processing between the verification information extraction unit 323 and the concealment processing unit 324, the VC has been described as an example, but the same may be applied to the VP, and the description thereof will be omitted.

The verification data presentation unit 325 receives the verification information group (public key identifier, revocation information identifier, validity information, and signature) extracted by the verification information extraction unit 323 and the hash value generated by the concealment processing unit 324, and presents all of them to the verification server 400 as verification data.

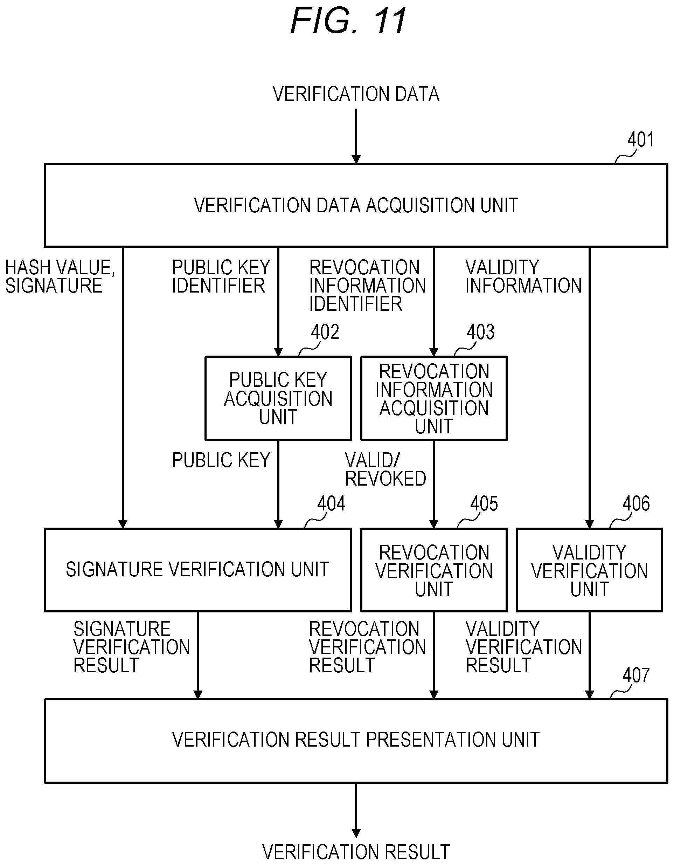

Fig. 11 is a diagram illustrating an example of verification in the verification server 400. The verification data acquisition unit 401 acquires the verification data generated by the Agent 320. The verification data includes the public key identifier, the revocation information identifier, the validity information, the signature, and the hash value.

The public key acquisition unit 402 receives the public key identifier from the verification data acquisition unit 401 and acquires the public key. For example, when the public key is stored in the VDR 500, the public key acquisition unit 402 acquires the public key corresponding to the identifier (ID_{Issuer}) of the Issuer 100 from the VDR 500 based on the identifier, and acquires the public key corresponding to the identifier (ID_{Holder}) of the Holder 200 from the VDR 500 based on the identifier.

The revocation information acquisition unit 403 receives the revocation information identifier from the verification data acquisition unit 401 and acquires the revocation information of the VP and the VC groups. For example, when the revocation information is stored in the VDR 500, the revocation information acquisition unit 403 acquires the revocation information of the VC corresponding to the identifier (ID_{VC1}) of the VC from the VDR 500 based on the identifier.

The processing order of the public key acquisition unit 402 and the revocation information acquisition unit 403 may be performed in parallel as illustrated in Fig. 11, or either may be performed first.

The signature verification unit 404 receives the hash value and the signature from the verification data acquisition unit 401 and receives the public key from the public key acquisition unit 402. Signature verification is performed by confirming consistency between the hash value of data corresponding to the signature and a value obtained by decrypting the signature with the public key. For example, when the format of the VC is JWT, the signature verification unit 404 verifies the signature of the VC by confirming consistency between the hash value of the header and the payload and a value obtained by decrypting the signature with the public key of the Issuer 100. For example, when the format of the VP is JWT, the signature verification unit 404 verifies the signature of the VC by confirming consistency between the hash value of the header and the payload and a value obtained by decrypting the signature with the public key of the Holder 200.

The revocation verification unit 405 receives the revocation information of the VP and the VC group from the revocation information acquisition unit 403. The revocation verification unit 405 receives the revocation information for the VP and the VC group and performs revocation verification for each of the VP and the VC group.

The validity verification unit 406 receives validity information from the verification data acquisition unit 401. For example, when a valid period is set in the VC, the validity verification unit 406 verifies the valid period.

The processing order of the signature verification unit 404, the revocation verification unit 405, and the validity verification unit 406 may be performed in parallel as illustrated in Fig. 11, or they may be performed in order.

The verification result presentation unit 407 receives the verification results of the VP and the VC group verified by the signature verification unit 404, the revocation verification unit 405, and the validity verification unit 406, and presents the verification results to the Agent 320 as verification results. For example, when the VP includes VC1 and VC2, the result of the signature verification, the revocation verification, the validity verification, and the revocation verification of VC1 is valid, and the result of the signature verification and the validity verification of VC2 is invalid, the verification result presentation unit 407 presents the result to the Agent 320 in a format such as "(VP: (signature verification: valid, revocation verification: valid, validity verification: valid), VC1: (signature verification: valid, revocation verification: valid, validity verification: valid), VC2: (signature verification: invalid, revocation verification: valid, validity verification: invalid)".

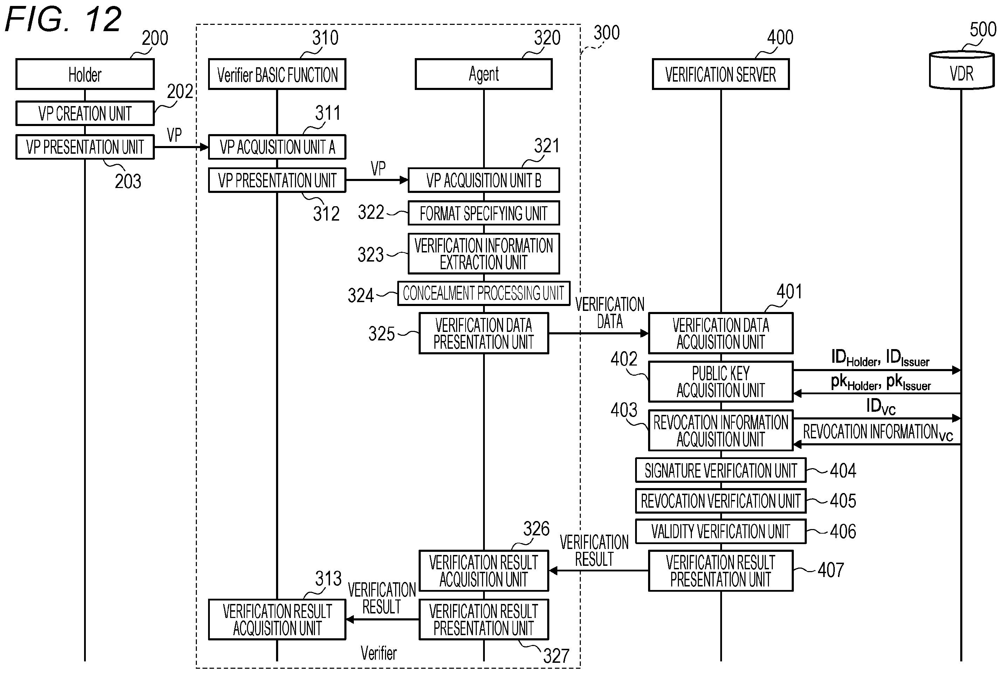

Fig. 12 is a sequence chart illustrating an example of a procedure according to the first embodiment. The sequence chart illustrates a series of flows in which the Holder 200 creates the VP and presents it to the Verifier 300, and the verification server 400 verifies the VP and passes the verification result to the Verifier 300.

The VP creation unit 202 of the Holder 200 creates the VC requested from the Verifier 300 as a VP. The VP presentation unit 203 presents the VP created by the VP creation unit 202 to the Verifier 300.

The Verifier 300 includes the Verifier basic function 310 and the Agent 320. The VP acquisition unit A311 of the Verifier basic function 310 receives the VP from the Holder 200. The VP presentation unit 312 passes the VP received by the VP acquisition unit A311 to the Agent 320.

The VP acquisition unit B321 of the Agent 320 receives the VP from the VP presentation unit 312. The format specifying unit 322 divides the VP into VC groups and specifies the format of the VP and each format of the divided VC groups. When specifying the format of the VP and each format of the VC groups, the format specifying unit 322 passes, to the verification information extraction unit 323 and the concealment processing unit 324, format data with which each verified portion and concealed portion can be specified. The verification information extraction unit 323 extracts a verification information group from the VP and VC groups by using the format data. The concealment processing unit 324 performs concealment processing of the VP and VC groups by using the format data. The verification data presentation unit 325 passes verification data including the verification information group extracted by the verification information extraction unit 323 and the hash value concealed by the concealment processing unit 324 to the verification server 400.

The verification data acquisition unit 401 of the verification server 400 receives the verification data. The public key acquisition unit 402 receives the public key identifier from the verification data acquisition unit 401 and acquires the public key. For example, when the public key is stored in the VDR 500, the public key acquisition unit 402 acquires the public key of the Issuer 100 from the VDR 500 by using the identifier of the Issuer 100, and acquires the public key of the Holder 200 from the VDR 500 by using the identifier of the Holder 200. The revocation information acquisition unit 403 receives the revocation information identifier from the verification data acquisition unit 401 and acquires the revocation information. For example, when the revocation information is stored in the VDR 500, the revocation information acquisition unit 403 acquires the revocation information of the VC from the VDR 500 based the identifier of the VC.

The signature verification unit 404 performs signature verification based on the verification data received from the verification data acquisition unit 401 and the public key received from the public key acquisition unit 402. The revocation verification unit 405 performs revocation verification on the VP and the VC groups by using the revocation information received from the revocation information acquisition unit 403. The validity verification unit 406 verifies the validity of the VP and VC groups using the validity information received from the verification data acquisition unit 401. The verification result presentation unit 407 receives the verification results of the VP and the VC group verified by the signature verification unit 404, the revocation verification unit 405, and the validity verification unit 406, and presents the verification results to the Agent as verification results.

In the Verifier 300, the verification result acquisition unit 326 of the Agent 320 receives the verification results from the verification server 400. The verification result presentation unit 327 of the Agent 320 passes the verification results to the Verifier basic function 310. The verification result acquisition unit 313 of the Verifier basic function 310 receives the verification results from the Agent 320, and the Verifier 300 performs authorization determination based on the attribute information of the VC and the verification results, and provides a service according to the result of the authorization determination.

According to the present embodiment, because the attribute information is concealed in the Verifier, signature verification, revocation verification, and validity verification can be performed while protecting the privacy of the user.

### (II) Second embodiment

The verification system using the present invention according to the second embodiment has substantially the same configuration and operation as the verification system using the present invention according to the first embodiment. Thus, differences will be mainly described below.

In the second embodiment, the Holder 200 includes an Agent 220. According to such a configuration, the user can pass the verification data to the verification server 400 on the user's own determination. In the Verifier 300, the VP is presented from the Agent 220, and the verification result is presented from the verification server 400. Thus, the Verifier 300 performs authorization determination by associating the VP and the verification result. Details will be described below.

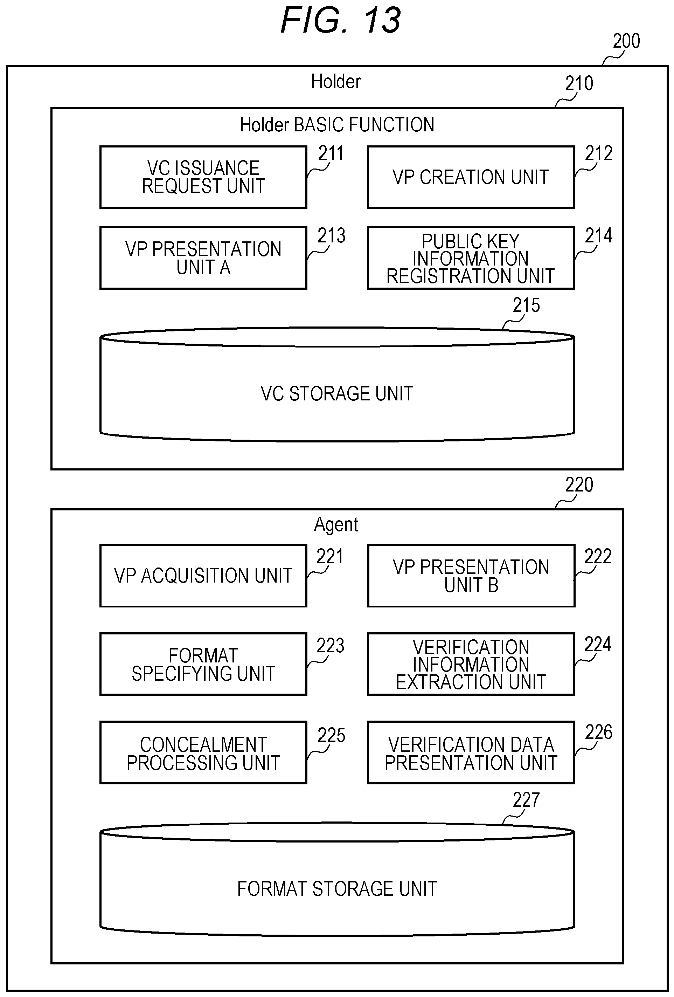

Fig. 13 is a block diagram illustrating an example of a software configuration of the Holder 200 according to the second embodiment. The Holder 200 includes a Holder basic function 210 and an Agent 220. The Holder basic function 210 includes a VC issuance request unit 211, a VP creation unit 212, a VP presentation unit A213, a public key information registration unit 214, and a VC storage unit 215. The Agent 220 includes a VP acquisition unit 221, a VP presentation unit B222, a format specifying unit 223, a verification information extraction unit 224, a concealment processing unit 225, a verification data presentation unit 226, and a format storage unit 227.

The VC issuance request unit 211 requests the Issuer 100 to issue a VC issuance request. The VP creation unit 212 creates a VC including attribute information of the user necessary for authorization determination of the Verifier 300 as a VP. A single or a plurality of VCs are included in the VP. The VP presentation unit A213 presents the VP created by the VP creation unit 212 to the VP acquisition unit 221 of the Agent 220. The public key information registration unit 214 registers the public key corresponding to the secret key of the Holder 200 in the VDR 500. The VC storage unit 215 stores and manages the VC.

The VP acquisition unit 221 acquires the VP presented from the Holder basic function 210. The VP presentation unit B222 presents the VP acquired by the VP acquisition unit 221 to the Verifier 300. The format specifying unit 223 divides the VP into VC groups and specifies the format of the VP and each format of the divided VC groups. When specifying the format of the VP and each format of the VC groups, the format specifying unit 223 passes, to the verification information extraction unit 224 and the concealment processing unit 225, format data with which each verified portion and concealed portion can be specified.

The verification information extraction unit 224 extracts a verification information group from the VP and VC groups by using the format data. The concealment processing unit 225 performs concealment processing of the VP and VC groups by using the format data. The verification data presentation unit 226 accepts an instruction from the user whether to send verification data including the verification information group extracted by the verification information extraction unit 224 and the hash value concealed by the concealment processing unit 225. In response to accepting an instruction from the user, the verification data presentation unit 226 passes the verification data to the verification server 400. The format storage unit 227 stores each format of the VP and the VC groups, and information of a verified portion and a concealed portion corresponding to the format in association with each other. In Fig. 13, the Agent 220 includes the format storage unit 227, but the format storage unit 227 may be prepared as an external storage, and the format storage unit 227 may exchange data with the Agent 220.

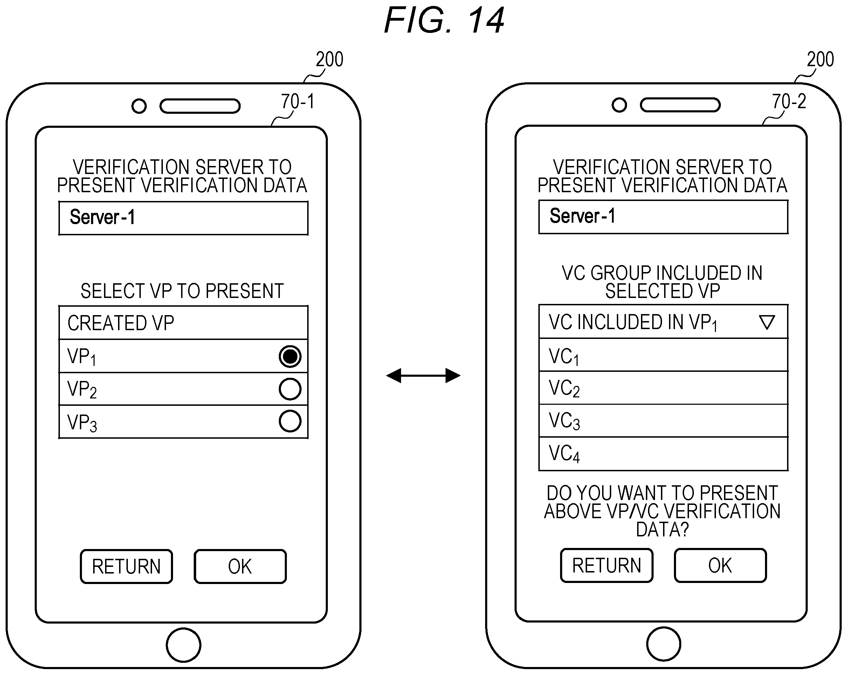

Fig. 14 is a diagram illustrating an example of a user interface (confirmation screen 70) when the Holder 200 presents the verification data to the verification server 400. When the verification data presentation unit 226 presents the verification data to the verification server 400, the confirmation screen 70 is displayed. On a confirmation screen 70-1, the user can confirm that the verification server 400 to present the verification data is "Server-1", and the VP to be presented is "VP1". On a confirmation screen 70-2, the user can confirm that "VP1" includes "VC1", "VC2", "VC3", and "VC4". Since the VC group included in the VP and the VP can be confirmed on the confirmation screen 70 in this manner, the user can select the verification server to present the verification data and the VP and the VC group to be presented on the user's own determination. The confirmation screen 70 may be displayed on a Wallet app downloaded to the Holder 200.

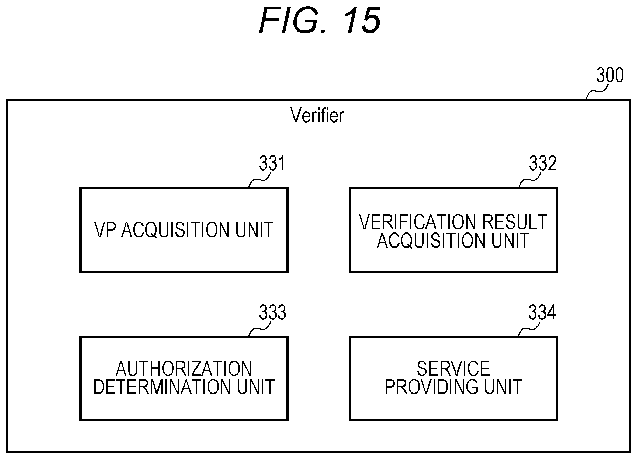

Fig. 15 is a block diagram illustrating an example of a software configuration of the Verifier 300 according to the second embodiment. The Verifier 300 includes a VP acquisition unit 331, a verification result acquisition unit 332, an authorization determination unit 333, and a service providing unit 334.

The VP acquisition unit 331 acquires the VP presented from the Holder 200. The verification result acquisition unit 332 receives the verification results from the verification server 400. The authorization determination unit 333 performs authorization determination based on the attribute information of the VC and the verification results. The service providing unit 334 provides a service according to a result of the authorization determination.

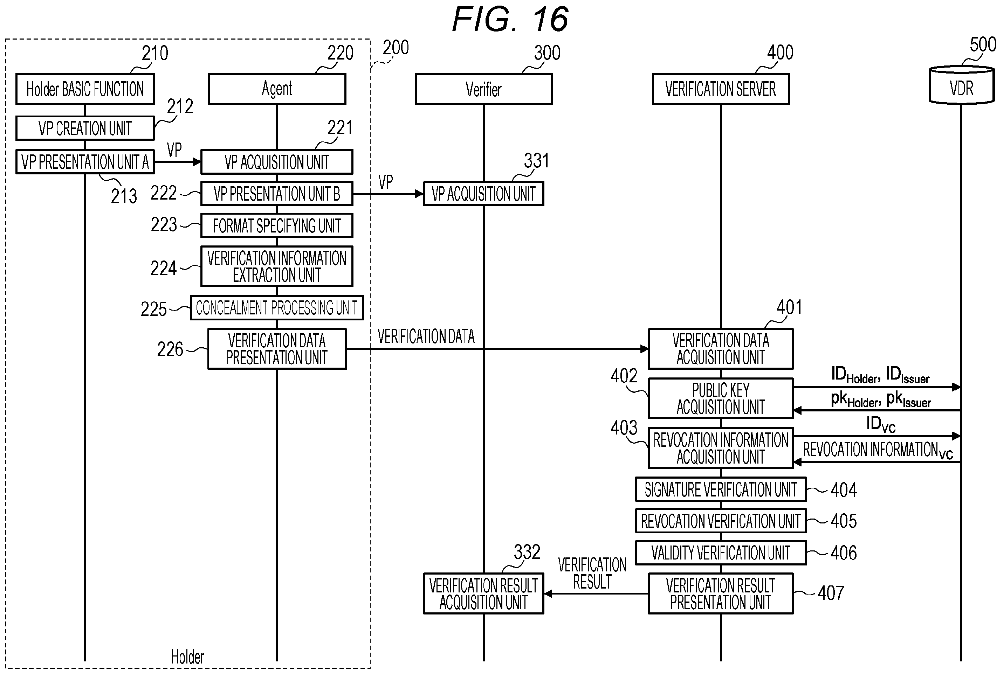

Fig. 16 is a sequence chart illustrating an example of a procedure according to the second embodiment. The sequence chart illustrates a series of flows in which the Holder 200 creates the VP and presents verification data to the verification server 400, and the verification server 400 verifies the VP and passes the verification result to the Verifier 300.

The Holder 200 includes the Holder basic function 210 and the Agent 220. The VP creation unit 212 of the Holder basic function 210 creates the VC requested from the Verifier 300 as the VP. The VP presentation unit A213 presents the VP created by the VP creation unit 212 to the Agent 220. The VP acquisition unit 221 of the Agent 220 receives the VP. The VP presentation unit B222 passes the VP received by the VP acquisition unit 221 to the Verifier 300.

The format specifying unit 223 divides the VP received by the VP acquisition unit 221 into VC groups, specifies the format of the VP and each format of the VC groups, and passes, to the verification information extraction unit 224 and the concealment processing unit 225, format data with which each verified portion and concealed portion can be specified. The verification information extraction unit 224 extracts a verification information group from the VP and VC groups by using the format data. The concealment processing unit 225 performs concealment processing of the VP and VC groups by using the format data. The verification data presentation unit 226 passes verification data including the verification information group extracted by the verification information extraction unit 224 and the hash value concealed by the concealment processing unit 225 to the verification server 400. At this time, a confirmation screen as illustrated in Fig. 14 is displayed to the user, and the user selects the verification server 400 to present the verification data and the VP and the VC group to be presented on the user's own determination.

The verification data acquisition unit 401 of the verification server 400 receives the verification data from the verification data presentation unit 226. The public key acquisition unit 402 receives the public key identifier from the verification data acquisition unit 401 and acquires the public key. For example, when the public key is stored in the VDR 500, the public key acquisition unit 402 acquires the public key of the Issuer 100 from the VDR 500 by using the identifier of the Issuer 100, and acquires the public key of the Holder 200 from the VDR 500 by using the identifier of the Holder 200. The revocation information acquisition unit 403 receives the revocation information identifiers of the VP and the VC groups from the verification data acquisition unit 401 and acquires the revocation information of the VP and the VC groups. For example, when the revocation information is stored in the VDR 500, the revocation information acquisition unit 403 acquires the revocation information of the VC from the VDR 500 by using the identifier of the VC.

The signature verification unit 404 performs signature verification of the VP and the VC groups based on the verification data received from the verification data acquisition unit 401 and the public key received from the public key acquisition unit 402. The revocation verification unit 405 performs revocation verification on the VP and the VC groups based on the revocation information received from the revocation information acquisition unit 403. The validity verification unit 406 verifies the validity of the VP and VC groups based on the validity information received from the verification data acquisition unit 401. The verification result presentation unit 407 receives the verification results of the VP and the VC groups verified by the signature verification unit 404, the revocation verification unit 405, and the validity verification unit 406, and presents the verification results to the Verifier 300 as verification results.

The VP acquisition unit 331 of the verifier 300 receives the VP from the Agent 220. The verification result acquisition unit 332 receives the verification results from the verification server 400. The authorization determination unit 333 performs authorization determination based on the attribute information of the VC and the verification results. At this time, to determine whether the verification results are reliable, the Verifier 300 needs to confirm that the verification is being performed by the verification server 400 and that the VP and the verification results are associated with each other. For example, by adding an identifier of the VP verification to the verification results and signing the verification results with the secret key of the verification server 400, the VP and the verification results can be associated with each other.

In the present embodiment, since the Agent 220 is included in the Holder 200, the internal organization of the Holder 200 can conceal the attribute information and extract the verification information group. In addition, the user can pass the verification data to the verification server 400 on the user's own determination. According to such a configuration, the Holder 200 determines whether privacy protection processing is necessary and performs privacy protection. Thus, the user can prevent leakage of the attribute information on the user's own determination.

### (III) Third embodiment

The verification system using the present invention according to the third embodiment has substantially the same configuration and operation as the verification system using the present invention according to the first embodiment and the second embodiment. Thus, differences will be mainly described below.

In the third embodiment, similarly to the second embodiment, the Holder 200 includes the Agent 240. Since the Holder 200 includes the Agent 240, the user can pass the verification data to the verification server 400 on the user's own determination. The third embodiment is mainly different from the second embodiment in that a verification result is presented from the Agent 240 to the Verifier 300.

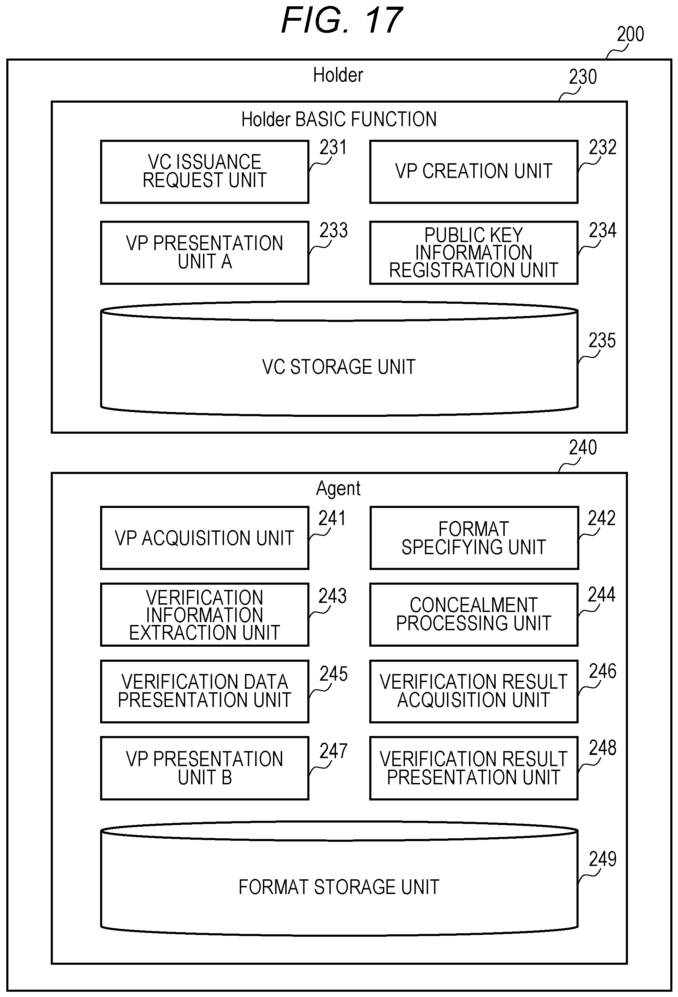

Fig. 17 is a block diagram illustrating an example of a software configuration of the Holder 200 according to the third embodiment. The Holder 200 includes a Holder basic function 230 and an Agent 240. The Holder basic function 230 includes a VC issuance request unit 231, a VP creation unit 232, a VP presentation unit A233, a public key information registration unit 234, and a VC storage unit 235. The Agent 240 includes a VP acquisition unit 241, a format specifying unit 242, a verification information extraction unit 243, a concealment processing unit 244, a verification data presentation unit 245, a verification result acquisition unit 246, a VP presentation unit B247, a verification result presentation unit 248, and a format storage unit 249.

The VC issuance request unit 231 requests the Issuer 100 to issue a VC issuance request. The VP creation unit 232 creates a VC including attribute information of the user necessary for authorization determination of the Verifier 300 as a VP. A single or a plurality of VCs are included in the VP. The VP presentation unit A233 presents the VP created by the VP creation unit 232 to the Agent 240. The public key information registration unit 234 registers the public key corresponding to the secret key of the Holder 200 in the VDR 500. The VC storage unit 235 stores and manages the VC.

The VP acquisition unit 241 acquires the VP presented from the Holder basic function 230. The format specifying unit 242 specifies the format of the VP acquired by the VP acquisition unit 241 and each format of the VC group included in the VP. The verification information extraction unit 243 extracts a verification information group from the VP and VC groups. The concealment processing unit 244 generates a hash value obtained by concealing the attribute information. The verification data presentation unit 245 passes verification data including the verification information group extracted by the verification information extraction unit 243 and the hash value created by the concealment processing unit 244 to the verification server 400.

The verification result acquisition unit 246 receives a verification result from the verification server 400. The VP presentation unit B247 presents the VP acquired by the VP acquisition unit 241 to the Verifier 300. The verification result presentation unit 248 passes the verification result to the Verifier 300. The format storage unit 249 stores each format of the VP and the VC group, and information of a verified portion and a concealed portion corresponding to the format in association with each other. In Fig. 17, the Agent 240 includes the format storage unit 249, but the format storage unit 249 may be prepared as an external storage, and the format storage unit 249 may exchange data with the Agent 240.

In the verification data presentation unit 245, similarly to the second embodiment, the presentation is confirmed on a confirmation screen as illustrated in Fig. 14. As a result, the verification server 400 to present the verification data and the VP and VC group to be presented can be selected on the determination of the user. The confirmation screen may be displayed on a Wallet app downloaded to the Holder 200.

The software configuration of the Verifier 300 according to the third embodiment is similar to that in Fig. 15, and is not illustrated. The Verifier 300 includes a VP acquisition unit 331, a verification result acquisition unit 332, an authorization determination unit 333, and a service providing unit 334.

The VP acquisition unit 331 acquires the VP presented from the Agent 240 of the Holder 200. The verification result acquisition unit 332 receives a verification result from the Agent 240. The authorization determination unit 333 performs authorization determination based on the attribute information of the VC and the verification results. The service providing unit 334 provides a service according to a result of the authorization determination.

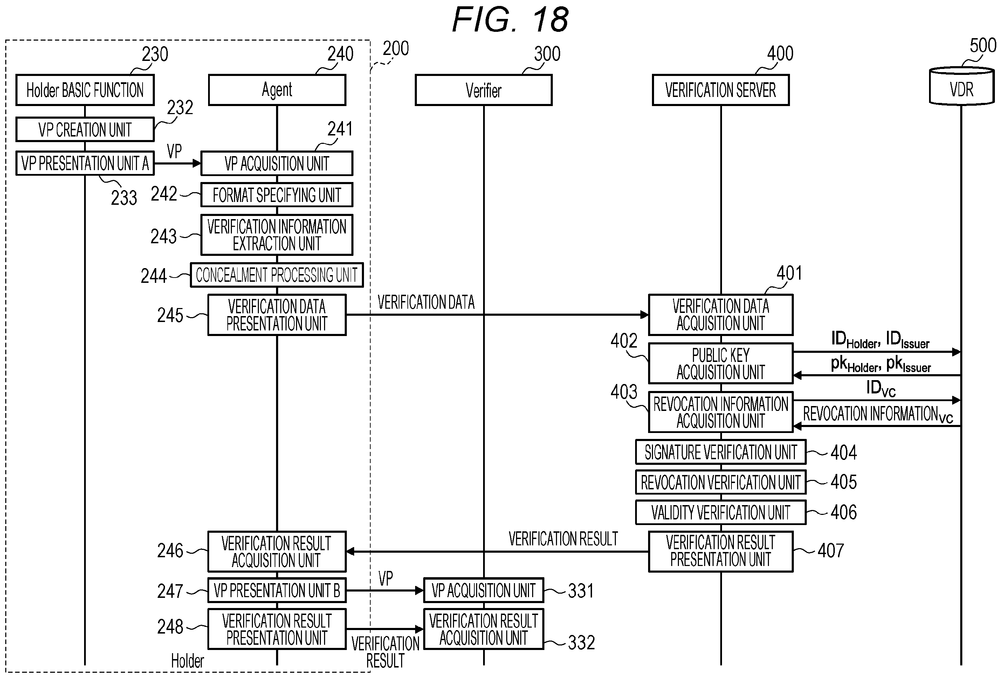

Fig. 18 is a sequence chart illustrating an example of a procedure according to the third embodiment. The sequence chart illustrates a series of flows in which the Holder 200 creates the VP and presents verification data to the verification server 400, the verification server 400 verifies the VP, and the Holder 200 passes the VP and the verification result to the Verifier 300.

The Holder 200 includes the Holder basic function 230 and the Agent 240. The VP creation unit 232 of the Holder basic function 230 creates the VC requested from the Verifier 300 as the VP. The VP presentation unit A233 presents the VP created by the VP creation unit 232 to the Agent 240.

The VP acquisition unit 241 of the Agent 240 receives the VP. The format specifying unit 242 divides the VP into VC groups, specifies the format of the VP and each format of the divided VC groups, and passes, to the verification information extraction unit 243 and the concealment processing unit 244, format data with which each verified portion and concealed portion can be specified. The verification information extraction unit 243 extracts a verification information group from the VP and VC groups by using the format data. The concealment processing unit 244 performs concealment processing of the VP and VC groups by using the format data. The verification data presentation unit 245 passes verification data including the verification information group extracted by the verification information extraction unit 243 and the hash value concealed by the concealment processing unit 244 to the verification server 400. At this time, a confirmation screen as illustrated in Fig. 14 is displayed to the user, and the user selects the verification server 400 to present the verification data and the VP and the VC group to be presented on the user's own determination.

The verification data acquisition unit 401 of the verification server 400 receives the verification data. The public key acquisition unit 402 receives the public key identifier from the verification data acquisition unit 401 and acquires the public key. For example, when the public key is stored in the VDR 500, the public key acquisition unit 402 acquires the public key of the Issuer 100 from the VDR 500 by using the identifier of the Issuer 100, and acquires the public key of the Holder 200 from the VDR 500 by using the identifier of the Holder 200. The revocation information acquisition unit 403 receives the revocation information identifier from the verification data acquisition unit 401 and acquires the revocation information of the VP and the VC groups. For example, when the revocation information is stored in the VDR 500, the revocation information acquisition unit 403 acquires the revocation information of the VC from the VDR 500 by using the identifier of the VC.

The signature verification unit 404 performs signature verification of the VP and the VC groups based on the verification data received from the verification data acquisition unit 401 and the public key received from the public key acquisition unit 402. The revocation verification unit 405 performs revocation verification on the VP and the VC groups based on the revocation information received from the revocation information acquisition unit 403. The validity verification unit 406 verifies the validity of the VP and VC groups based on the validity information received from the verification data acquisition unit 401. The verification result presentation unit 407 receives the verification results of the VP and the VC groups verified by the signature verification unit 404, the revocation verification unit 405, and the validity verification unit 406, and presents the verification results to the Agent 240 as verification results.

The verification result acquisition unit 246 of the Agent 240 receives the verification results from the verification server 400. The VP presentation unit B247 passes the VP to the Verifier 300. The verification result presentation unit 248 passes the verification results to the Verifier 300. Presentation of the VP and the verification results is performed in association with each other. For example, presentation of the VP and the verification results may be performed simultaneously.

In the Verifier 300, the VP acquisition unit 331 receives the VP. The verification result acquisition unit 332 receives the verification results. The authorization determination unit 333 performs authorization determination based on the attribute information of the VC and the verification results. At this time, the VP and the verification results need to be associated with each other.

Since the Holder 200 includes the Agent 240 in the present embodiment, the user can prevent leakage of the attribute information on the user's own determination as in the second embodiment. In addition, since the VP and the verification results are simultaneously presented to the Verifier 300, it is easy to associate the VP and the verification results with the Verifier 300. Further, similarly to the second embodiment, by adding an identifier of the VP verification to the verification result and signing the verification results with the secret key of the verification server 400, the Verifier 300 can confirm that the verification is performed by the verification server 400 and that the VP and the verification results are associated with each other.

### (IV) Supplementary note

The above-described embodiments include, for example, the following contents.

In the above-described embodiments, a case where the present invention is applied to a verification system has been described, but the present invention is not limited to this configuration, and can be widely applied to other various systems, devices, methods, and programs.

In the above-described embodiments, a case where the verification data of a VC is generated when there is a request of the VP has been described, but the present invention is not limited to this configuration. For example, the Holder 200 may generate the verification data of a VC when receiving the VC from the Issuer 100.

In the above-described embodiments, a part or all of the program may be installed from a program source to a device such as a computer that realizes an entity. The program source may be, for example, a program distribution server connected via a network or a computer-readable recording medium (for example, a non-transitory recording medium). In addition, in the above description, two or more programs may be realized as one program, or one program may be realized as two or more programs.

In the above-described embodiments, the screen illustrated and described is an example, and any design may be used as long as the information to be accepted is the same.

In the above-described embodiments, the screen illustrated and described is an example, and any design may be used as long as the information to be presented is the same.

In the above-described embodiments, the output of information is not limited to display on a display. The output of information may be audio output with a speaker, may be output to a file, may be printing on a paper medium or the like with a printing device, may be projection on a screen or the like with a projector, or may be in another mode.

In the above description, information such as a program, a table, and a file for realizing each function can be stored in a storage device such as a memory, a hard disk, or a solid state drive (SSD), or a recording medium such as an IC card, an SD card, or a DVD.

The above-described embodiments have, for example, the following characteristic configurations.
(1) A verification system (for example, the verification system 1000) that verifies certificate information (for example, VP, VC) including attribute information indicating an attribute of a user (for example, attribute information, personal information) and information for verification related to verification of a qualification of the user (for example, public identifier, revocation information identifier, validity information, signature), the verification system including a specifying unit (for example, the format specifying unit 322, the format specifying unit 223, and format specifying unit 242) that specifies a format of the certificate information, an extraction unit (for example, the verification information extraction unit 323, the verification information extraction unit 224, and the verification information extraction unit 243) that extracts the information for verification from the certificate information based on a result of specification performed by the specifying unit (for example, format data), a concealment unit (for example, the concealment processing unit 324, the concealment processing unit 225, and the concealment processing unit 244) that conceals a predetermined portion (for example, concealed portion) including the attribute information of the certificate information to generate concealed attribute information (for example, hash value), and a verification unit (for example, the verification server 400, the signature verification unit 404, the revocation verification unit 405, and the validity verification unit 406) that performs verification based on the information for verification extracted by the extraction unit and the concealed attribute information generated by the concealment unit. The predetermined portion may be specified by the specifying unit, may be specified by the concealment unit, or may be specified by other units.
   In the above configuration, the information for verification extracted according to the format of the certificate information and the concealed attribute information in which the attribute information is concealed instead of the attribute information of the user are used for verification, and thus, for example, it is possible to verify certificate information in various formats while protecting the privacy of the user.
(2) The specifying unit specifies a verified portion including the information for verification in the certificate information (for example, verified portion), and specifies a concealed portion including the attribute information of the certificate information (for example, concealed portion) as the predetermined portion, the extraction unit extracts the information for verification from the certificate information based on the verified portion specified by the specifying unit, and the concealment unit conceals the concealed portion specified by the specifying unit to generate the concealed attribute information (see Fig. 10, for example). The specifying unit may specify the format of the certificate information by using the format specifying information indicating the format of the certificate information stored in the storage unit, may specify the format of the certificate information according to the processing designated in the program, or may specify the format of the certificate information by using another method.
   According to the above configuration, the concealed portion and the verified portion are specified by the specifying unit. Thus, for example, the processing related to the specification can be efficiently performed.
(3) The verification system includes a storage unit (for example, the format storage unit 328, the format storage unit 227, and the format storage unit 249) that stores information in which format specifying information with which the format of the certificate information can be specified (for example, format specifying information), verified portion information indicating the verified portion including information for verification in the certificate information (for example, verified portion information), and concealed portion information indicating the concealed portion including the attribute information of the certificate information (for example, concealed portion information) are associated with each other, wherein the specifying unit specifies the format of the certificate information based on the format specifying information stored in the storage unit, and specifies the verified portion information and the concealed portion information associated with the format specifying information of the format that has been specified (see Fig. 10, for example).
   According to the above configuration, for example, the format specifying information, the concealed portion information, and the verified portion information are stored in the storage unit in association with each other. Thus, the format of the certificate information can be easily managed.
(4) The certificate information (for example, VC20) includes attribute information indicating an attribute of the user (for example, the attribute information 22B) and information for verification related to verification of a qualification of the user, the information for verification includes verification information (for example, the verification information 22C) including public key specifying information with which a public key corresponding to a secret key of an issuer who has issued the qualification can be specified (for example, public key identifier), revocation specifying information with which whether the qualification is revoked can be specified (for example, revocation information identifier), and validity specifying information with which validity of the qualification can be specified (for example, validity information), and a signature in which the attribute information and the verification information are concealed are signed with the secret key of the issuer (for example, the signature 23), and the extraction unit extracts the public key specifying information, the revocation specifying information, the validity specifying information, and the signature from the certificate information based on a result of specification performed by the specifying unit (see Fig. 8, for example).
   According to the above configuration, for example, the verification unit can verify the certificate information using the public key specifying information, the revocation specifying information, the validity specifying information, and the signature.
(5) The concealment unit conceals the predetermined portion including the attribute information of the certificate information based on the result of specification performed by the specifying unit (for example, format data) to generate concealed attribute information (see Fig. 10, for example).
   According to the above configuration, the concealment unit can conceal the attribute information according to the format of the certificate information.
(6) The concealment unit hashes the predetermined portion including the attribute information of the certificate information based on the result of specification performed by the specifying unit to generate a hash value as the concealed attribute information (see Fig. 10, for example).
   In the above configuration, the verification is performed using the hash value in the verification unit. Thus, for example, the attribute information is not restored in the verification unit, and the attribute information of the user can be more firmly protected.
(7) The certificate information includes attribute information indicating an attribute of the user and information for verification related to verification of a qualification of the user, the information for verification includes concealed attribute processing information (for example, signature) obtained by performing predetermined processing (for example, electronic signature) on concealed attribute information in which a portion including the attribute information is concealed, and the verification unit performs signature verification based on the concealed attribute information generated by the concealment unit and the concealed attribute processing information included in the certificate information (see Fig. 11, for example).
   According to the above configuration, for example, signature verification can be performed while concealing attribute information of the user.
(8) The certificate information includes attribute information indicating an attribute of the user and information for verification related to verification of a qualification of the user, the information for verification includes revocation specifying information (for example, revocation information identifier) with which whether the qualification is revoked can be specified, the extraction unit extracts the revocation specifying information included in the information for verification of the certificate information, and the verification unit performs revocation verification based on the revocation specifying information extracted by the extraction unit (see Fig. 11, for example).
   According to the above configuration, for example, revocation verification can be performed while concealing attribute information of the user.
(9) The certificate information includes attribute information indicating an attribute of the user and information for verification related to verification of a qualification of the user, the information for verification includes validity specifying information (for example, validity information) with which validity of the qualification can be specified, the extraction unit extracts validity specifying information included in the information for verification of the certificate information, and the verification unit performs validity verification based on the validity specifying information extracted by the extraction unit.
   According to the above configuration, for example, validity verification can be performed while concealing attribute information of the user.
(10) An issuance device (for example, the Issuer 100) that issues certificate information including the attribute information indicating an attribute of the user and the information for verification related to verification of a qualification of the user, a holding device (for example, the Holder 200) that holds the certificate information, a verification device (for example, the verification server 400) that verifies the certificate information, and a processing device (for example, the Verifier 300) that performs processing related to the user based on the certificate information and a verification result of the verification device are communicably connected to each other, the processing device includes the specifying unit, the extraction unit, the concealment unit, and a first transmission unit (for example, the verification data presentation unit 325) that transmits the information for verification extracted by the extraction unit and the concealed attribute information generated by the concealment unit to the verification device, the verification device includes a first reception unit (for example, the verification data acquisition unit 401) that receives the information for verification and the concealed attribute information transmitted by the first transmission unit, the verification unit, and a second transmission unit (for example, the verification result presentation unit 407) that transmits a verification result of the verification unit to the processing device, and the processing device includes a second reception unit (for example, the verification result acquisition unit 326) that receives the verification result transmitted by the second transmission unit.
   In the above configuration, the information for verification extracted according to the format of the certificate information and the concealed attribute information in which the attribute information is concealed are sent to the verification device. Thus, for example, the verification device can verify the certificate information while protecting the privacy of the user.
(11) An issuance device (for example, the Issuer 100) that issues certificate information including the attribute information indicating an attribute of the user and the information for verification related to verification of a qualification of the user, a holding device (for example, the Holder 200) that holds the certificate information, a verification device (for example, the verification server 400) that verifies the certificate information, and a processing device (for example, the Verifier 300) that performs processing related to the user based on the certificate information and a verification result of the verification device are communicably connected to each other, the holding device includes the specifying unit, the extraction unit, the concealment unit, an acceptance unit (for example, the verification data presentation unit 226) that accepts, from the user, an instruction as to whether to transmit, to the verification device, the information for verification extracted by the extraction unit and the concealed attribute information generated by the concealment unit, and a first transmission unit (for example, the verification data presentation unit 226) that transmits, to the verification device, the information for verification and the concealed attribute information in response to acceptance of the instruction by the acceptance unit, the verification device includes a first reception unit (for example, the verification data acquisition unit 401) that receives the information for verification and the concealed attribute information transmitted by the first transmission unit, the verification unit, and a second transmission unit (for example, the verification result presentation unit 407) that transmits a verification result of the verification unit to the processing device, and the processing device includes a second reception unit (for example, the verification result acquisition unit 332) that receives the verification result transmitted by the second transmission unit.
   In the above configuration, the holding device can conceal the attribute information and extract the information for verification. In addition, it is possible to pass the concealed attribute information and the information for verification to the verification device according to the user's own determination. According to the above configuration, the holding device conceals the attribute information and transmits the concealed attribute information and the information for verification based on the instruction of the user. Thus, it is possible to prevent leakage of information not intended by the user.
(12) An issuance device (for example, the Issuer 100) that issues certificate information including the attribute information indicating an attribute of the user and the information for verification related to verification of a qualification of the user, a holding device (for example, the Holder 200) that holds the certificate information, a verification device (for example, the verification server 400) that verifies the certificate information, and a processing device (for example, the Verifier 300) that performs processing related to the user based on the certificate information and a verification result of the verification device are communicably connected to each other, the holding device includes the specifying unit, the extraction unit, the concealment unit, an acceptance unit (for example, the verification data presentation unit 245) that accepts, from the user, an instruction as to whether to transmit, to the verification device, the information for verification extracted by the extraction unit and the concealed attribute information generated by the concealment unit, and a first transmission unit (for example, the verification data presentation unit 245) that transmits, to the verification device, the information for verification and the concealed attribute information in response to acceptance of the instruction by the acceptance unit, the verification device includes a first reception unit (for example, the verification data acquisition unit 401) that receives the information for verification and the concealed attribute information transmitted by the first transmission unit, the verification unit, and a second transmission unit (for example, the verification result presentation unit 407) that transmits a verification result of the verification unit to the holding device, the holding device includes a second reception unit (for example, the verification result acquisition unit 246) that receives the verification result transmitted by the second transmission unit and a third transmission unit (for example, the VP presentation unit B247 and the verification result presentation unit 248) that transmits the certificate information and the verification result in association with each other to the processing device, and the processing device includes a third reception unit (for example, the VP acquisition unit 331 and the verification result acquisition unit 332) that receives the certificate information and the verification result transmitted by the third transmission unit.

In the above configuration, the certificate information and the verification result are transmitted from the holding device to the processing device in association with each other. According to the above configuration, it is possible to prevent leakage of information not intended by the user while reducing the burden on the processing device that associates the certificate information with the verification result.

The above-described configurations may be appropriately changed, rearranged, combined, or omitted.

Items included in a list in the format "at least one of A, B, and C" may be understood to mean (A), (B), (C), (A and B), (A and C), (B and C), or (A, B, and C). Similarly, items included in a list in the format "at least one of A, B, or C" may be understood to mean (A), (B), (C), (A and B), (A and C), (B and C), or (A, B, and C).

## Claims

1. A verification system that verifies certificate information including attribute information indicating an attribute of a user and information for verification related to verification of a qualification of the user, the verification system comprising:
a specifying unit (322) that first specifies a format of the certificate information and then specifies a verified portion including the information for verification in the certificate information, and specifies a concealed portion including the attribute information of the certificate information as the predetermined portion;
an extraction unit (323) that extracts the information for verification from the certificate information based on a result of specification performed by the specifying unit (322);
a concealment unit (324) that conceals a predetermined portion including the attribute information of the certificate information to generate concealed attribute information; and
a verification unit (400) that performs verification based on the information for verification extracted by the extraction unit (323) and the concealed attribute information generated by the concealment unit (324),
the extraction unit (323) extracts the information for verification from the certificate information based on the verified portion specified by the specifying unit (322), and
the concealment unit (324) conceals the concealed portion specified by the specifying unit (322) to generate the concealed attribute information,
wherein the verification system further comprising a storage unit that stores information in which format specifying data with which the format of the certificate information can be specified, verified portion information indicating the verified portion including information for verification in the certificate information, and concealed portion information indicating the concealed portion including the attribute information of the certificate information are associated with each other, wherein
the specifying unit (322) specifies the format of the certificate information based on the format specifying data stored in the storage unit, and specifies the verified portion information and the concealed portion information associated with the format specifying data of the format that has been specified.

2. The verification system according to at least one of the previous claims, wherein
the certificate information includes the attribute information indicating the attribute of the user and information for verification related to verification of a qualification of the user,
the information for verification includes:
verification information including public key specifying information with which a public key corresponding to a secret key of an issuer who has issued the qualification can be specified, revocation specifying information with which whether the qualification is revoked can be specified, and validity specifying information with which validity of the qualification can be specified; and
a signature in which the attribute information and the verification information are concealed are signed with the secret key of the issuer, and
the extraction unit (323) extracts the public key specifying information, the revocation specifying information, the validity specifying information, and the signature from the certificate information based on a result of specification performed by the specifying unit (322).

3. The verification system according to at least one of the previous claims, wherein
the concealment unit (324) conceals a predetermined portion including the attribute information of the certificate information to generate the concealed attribute information based on a result of specification performed by the specifying unit (322).

4. The verification system according to claim 3, wherein
the concealment unit (324) hashes the predetermined portion including the attribute information of the certificate information based on the result of specification performed by the specifying unit (322) to generate a hash value as the concealed attribute information.

5. The verification system according to at least one of the previous claims, wherein
the certificate information includes the attribute information indicating the attribute of the user and the information for verification related to verification of the qualification of the user,
the information for verification includes concealed attribute processing information obtained by performing predetermined processing on concealed attribute information in which a portion including the attribute information is concealed, and
the verification unit (400) performs signature verification based on the concealed attribute information generated by the concealment unit (324) and the concealed attribute processing information included in the certificate information.

6. The verification system according to claim 1, wherein
the certificate information includes the attribute information indicating the attribute of the user and the information for verification related to verification of the qualification of the user,
the information for verification includes revocation specifying information with which whether the qualification is revoked can be specified,
the extraction unit (323) extracts the revocation specifying information included in the information for verification of the certificate information, and
the verification unit (400) performs revocation verification based on the revocation specifying information extracted by the extraction unit (323).

7. The verification system according to at least one of the previous claims, wherein
the certificate information includes the attribute information indicating the attribute of the user and the information for verification related to verification of the qualification of the user,
the information for verification includes validity specifying information with which validity of the qualification can be specified,
the extraction unit (323) extracts validity specifying information included in the information for verification of the certificate information, and
the verification unit (400) performs validity verification based on the validity specifying information extracted by the extraction unit (323).

8. The verification system according to at least one of the previous claims, wherein
an issuance device (100) that issues certificate information including the attribute information indicating the attribute of the user and the information for verification related to verification of the qualification of the user, a holding device (200) that holds the certificate information, a verification device (400) that verifies the certificate information, and a processing device (300) that performs processing related to the user based on the certificate information and a verification result of the verification device (400) are communicably connected to each other,
the processing device (300) includes the specifying unit (322), the extraction unit (323), the concealment unit (324), and a first transmission unit that transmits the information for verification extracted by the extraction unit (323) and the concealed attribute information generated by the concealment unit (324) to the verification device (400),
the verification device (400) includes a first reception unit that receives the information for verification and the concealed attribute information transmitted by the first transmission unit, the verification unit (400), and a second transmission unit that transmits a verification result of the verification unit (400) to the processing device (300), and
the processing device (300) includes a second reception unit that receives the verification result transmitted by the second transmission unit.

9. The verification system according to at least one of the previous claims, wherein
an issuance device (100) that issues certificate information including the attribute information indicating the attribute of the user and the information for verification related to verification of the qualification of the user, a holding device (200) that holds the certificate information, a verification device (400) that verifies the certificate information, and a processing device (300) that performs processing related to the user based on the certificate information and a verification result of the verification device (400) are communicably connected to each other,
the holding device (200) includes the specifying unit (322), the extraction unit (323), the concealment unit (324), an acceptance unit that accepts, from the user, an instruction as to whether to transmit, to the verification device (400), the information for verification extracted by the extraction unit (323) and the concealed attribute information generated by the concealment unit (324), and a first transmission unit that transmits, to the verification device (400), the information for verification and the concealed attribute information in response to acceptance of the instruction by the acceptance unit,
the verification device (400) includes a first reception unit that receives the information for verification and the concealed attribute information transmitted by the first transmission unit, the verification unit (400), and a second transmission unit that transmits a verification result of the verification unit (400) to the processing device (300), and
the processing device (300) includes a second reception unit that receives the verification result transmitted by the second transmission unit.

10. The verification system according to at least one of the previous claims, wherein
an issuance device (100) that issues certificate information including the attribute information indicating the attribute of the user and the information for verification related to verification of the qualification of the user, a holding device (200) that holds the certificate information, a verification device (400) that verifies the certificate information, and a processing device (300) that performs processing related to the user based on the certificate information and a verification result of the verification device (400) are communicably connected to each other,
the holding device (200) includes the specifying unit (322), the extraction unit (323), the concealment unit (324), an acceptance unit that accepts, from the user, an instruction as to whether to transmit, to the verification device (400), the information for verification extracted by the extraction unit (323) and the concealed attribute information generated by the concealment unit (324), and a first transmission unit that transmits, to the verification device (400), the information for verification and the concealed attribute information in response to acceptance of the instruction by the acceptance unit,
the verification device (400) includes a first reception unit that receives the information for verification and the concealed attribute information transmitted by the first transmission unit, the verification unit (400), and a second transmission unit that transmits a verification result of the verification unit (400) to the holding device (200),
the holding device (200) includes a second reception unit that receives the verification result transmitted by the second transmission unit and a third transmission unit that transmits the certificate information and the verification result in association with each other to the processing device (300), and
the processing device (300) includes a third reception unit that receives the certificate information and the verification result transmitted by the third transmission unit.

11. A verification method for verifying certificate information including attribute information indicating an attribute of a user and information for verification related to verification of a qualification of the user, the verification method comprising:
specifying first, with a specifying unit (322), a format of the certificate information and then specifying, with the specifying unit (322), a verified portion including the information for verification in the certificate information, and specifying a concealed portion including the attribute information of the certificate information as the predetermined portion,
extracting, with an extraction unit (323), the information for verification from the certificate information based on a result of specification performed by the specifying unit (322);
concealing, with a concealment unit (324), a predetermined portion including the attribute information of the certificate information to generate concealed attribute information; and
performing, with a verification unit (400), verification based on the information for verification extracted by the extraction unit (323) and the concealed attribute information generated by the concealment unit (324);
extracting, with the extraction unit (323), the information for verification from the certificate information based on the verified portion specified by the specifying unit (322); and
concealing, with the concealment unit (324), the concealed portion specified by the specifying unit (322) to generate the concealed attribute information,
storing, in a storage unit, an information in which format specifying data with which the format of the certificate information can be specified, verified portion information indicating the verified portion including information for verification in the certificate information, and concealed portion information indicating the concealed portion including the attribute information of the certificate information are associated with each other,
specifying, by the specifying unit (322), the format of the certificate information based on the format specifying data stored in the storage unit, and specifies the verified portion information and the concealed portion information associated with the format specifying data of the format that has been specified.

## Patentansprüche

1. Verifizierungssystem, das Zertifikatinformationen, die Attributinformationen, die ein Attribut eines Benutzers angeben, und Informationen für die Verifizierung in Bezug auf die Verifizierung einer Berechtigung des Benutzers enthalten, verifiziert, wobei das Verifizierungssystem umfasst:
eine Spezifizierungseinheit (322), die zunächst ein Format der Zertifikatinformationen spezifiziert und daraufhin einen verifizierten Abschnitt, der die Informationen für die Verifizierung in den Zertifikatinformationen enthält, spezifiziert, und die einen verborgenen Abschnitt, der die Attributinformationen der Zertifikatinformationen enthält, als den vorgegebenen Abschnitt spezifiziert;
eine Extraktionseinheit (323), die auf der Grundlage eines Ergebnisses der durch die Spezifizierungseinheit (322) ausgeführten Spezifizierung aus den Zertifikatinformationen die Informationen für die Verifizierung extrahiert;
eine Verbergungseinheit (324), die einen vorgegebenen Abschnitt, der die Attributinformationen der Zertifikatinformationen enthält, verbirgt, um verborgene Attributinformationen zu erzeugen; und
eine Verifizierungseinheit (400), die auf der Grundlage der durch die Extraktionseinheit (323) extrahierten Informationen für die Verifizierung und der durch die Verbergungseinheit (324) erzeugten verborgenen Attributinformationen eine Verifizierung ausführt,
wobei die Extraktionseinheit (323) die Informationen für die Verifizierung auf der Grundlage des durch die Spezifizierungseinheit (322) spezifizierten verifizierten Abschnitts aus den Zertifikatinformationen extrahiert, und
die Verbergungseinheit (324) den durch die Spezifizierungseinheit (322) spezifizierten verborgenen Abschnitt verbirgt, um die verborgenen Attributinformationen zu erzeugen,
wobei das Verifizierungssystem ferner eine Speichereinheit umfasst, die Informationen speichert, in denen Formatspezifizierungsdaten, mit denen das Format der Zertifikatinformationen spezifiziert werden kann, Informationen des verifizierten Abschnitts, die den verifizierten Abschnitt angeben, die Informationen für die Verifizierung in den Zertifikatinformationen enthalten, und Informationen des verborgenen Abschnitts, die den verborgenen Abschnitt angeben, die die Attributinformationen der Zertifikatinformationen enthalten, einander zugeordnet sind, wobei
die Spezifizierungseinheit (322) das Format der Zertifikatinformationen auf der Grundlage der in der Speichereinheit gespeicherten Formatspezifizierungsdaten spezifiziert und die Informationen des verifizierten Abschnitts und die Informationen des verborgenen Abschnitts, die den Formatspezifizierungsdaten des Formats, das spezifiziert worden ist, zugeordnet sind, spezifiziert.

2. Verifizierungssystem nach wenigstens einem der vorhergehenden Ansprüche, wobei
die Zertifikatinformationen die Attributinformationen, die das Attribut des Benutzers angeben, und Informationen für die Verifizierung in Bezug auf die Verifizierung einer Berechtigung des Benutzers enthalten,
wobei die Informationen für die Verifizierung enthalten:
Verifizierungsinformationen, die einen öffentlichen Schlüssel, der Informationen, mit denen ein öffentlicher Schlüssel, der einem geheimen Schlüssel eines Ausgebers, der die Berechtigung ausgegeben hat, entspricht, spezifiziert werden kann, spezifiziert, Widerrufsspezifizierungsinformationen, mit denen spezifiziert werden kann, ob die Berechtigung widerrufen wird, und Gültigkeitsspezifizierungsinformationen, mit denen die Gültigkeit der Berechtigung spezifiziert werden kann, enthalten; und
eine Signatur, in der die Attributinformationen und die Verifizierungsinformationen verborgen sind, mit dem geheimen Schlüssel des Ausgebers signiert sind, und
wobei die Extraktionseinheit (323) die Spezifizierungsinformationen des öffentlichen Schlüssels, die Widerrufsspezifizierungsinformationen, die Gültigkeitsspezifizierungsinformationen und die Signatur von den Zertifikatinformationen auf der Grundlage eines Ergebnisses einer durch die Spezifizierungseinheit (322) ausgeführten Spezifizierung extrahiert.

3. Verifizierungssystem nach wenigstens einem der vorhergehenden Ansprüche, wobei
die Verbergungseinheit (324) auf der Grundlage eines Ergebnisses der durch die Spezifizierungseinheit (322) ausgeführten Spezifizierung einen vorgegebenen Abschnitt, der die Attributinformationen der Zertifikatinformationen enthält, verbirgt, um die verborgenen Attributinformationen zu erzeugen.

4. Verifizierungssystem nach Anspruch 3, wobei
die Verbergungseinheit (324) auf der Grundlage des Ergebnisses der durch die Spezifizierungseinheit (322) ausgeführten Spezifizierung den vorgegebenen Abschnitt, der die Attributinformationen der Zertifikatinformationen enthält, Hash-codiert, um als die verborgenen Attributinformationen einen Hash-Wert zu erzeugen.

5. Verifizierungssystem nach wenigstens einem der vorhergehenden Ansprüche, wobei
die Zertifikatinformationen die Attributinformationen, die das Attribut des Benutzers angeben, und die Informationen für die Verifizierung in Bezug auf die Verifizierung der Berechtigung des Benutzers enthalten,
die Informationen für die Verifizierung verborgene Attribut-Verarbeitungs-Informationen enthalten, die durch Ausführen einer vorgegebenen Verarbeitung an verborgenen Attributinformationen, in denen ein Abschnitt, der die Attributinformationen enthält, verborgen ist, erhalten werden, und
die Verifizierungseinheit (400) auf der Grundlage der durch die Verbergungseinheit (324) erzeugten verborgenen Attributinformationen und der in den Zertifikatinformationen enthaltenen verborgenen Attribut-Verarbeitungs-Informationen eine Signaturverifizierung ausführt.

6. Verifizierungssystem nach Anspruch 1, wobei
die Zertifikatinformationen die Attributinformationen, die das Attribut des Benutzers angeben, und die Informationen für die Verifizierung in Bezug auf die Verifizierung der Berechtigung des Benutzers enthalten,
die Informationen für die Verifizierung Widerrufsspezifizierungsinformationen, mit denen spezifiziert werden kann, ob die Qualifizierung widerrufen wird, enthalten,
die Extraktionseinheit (323) die in den Informationen für die Verifizierung der Zertifikatinformationen enthaltenen Widerrufsspezifizierungsinformationen extrahiert, und
die Verifizierungseinheit (400) auf der Grundlage der durch die Extraktionseinheit (323) extrahierten Widerrufsspezifizierungsinformationen eine Widerrufsverifizierung ausführt.

7. Verifizierungssystem nach wenigstens einem der vorhergehenden Ansprüche, wobei
die Zertifikatinformationen die Attributinformationen, die das Attribut des Benutzers angeben, und die Informationen für die Verifizierung in Bezug auf die Verifizierung der Berechtigung des Benutzers enthalten,
die Informationen für die Verifizierung Gültigkeitsspezifizierungsinformationen, mit denen die Gültigkeit der Berechtigung spezifiziert werden kann, enthalten,
die Extraktionseinheit (323) in den Informationen für die Verifizierung der Zertifikatinformationen enthaltene Gültigkeitsspezifizierungsinformationen extrahiert, und
die Verifizierungseinheit (400) auf der Grundlage der durch die Extraktionseinheit (323) extrahierten Gültigkeitsspezifizierungsinformationen die Gültigkeitsverifizierung ausführt.

8. Verifizierungssystem nach wenigstens einem der vorhergehenden Ansprüche, wobei
eine Ausgabevorrichtung (100), die Zertifikatinformationen, die die Attributinformationen, die das Attribut des Benutzers angeben, und die Informationen für die Verifizierung in Bezug auf die Verifizierung der Berechtigung des Benutzers enthalten, ausgibt, eine Haltevorrichtung (200), die die Zertifikatinformationen hält, eine Verifizierungsvorrichtung (400), die die Zertifikatinformationen verifiziert, und eine Verarbeitungsvorrichtung (300), die auf der Grundlage der Zertifikatinformationen und eines Verifizierungsergebnisses der Verifizierungsvorrichtung (400) eine Verarbeitung in Bezug auf den Benutzer ausführt, kommunikationstechnisch miteinander verbunden sind,
die Verarbeitungsvorrichtung (300) die Spezifizierungseinheit (322), die Extraktionseinheit (323), die Verbergungseinheit (324) und eine erste Sendeeinheit, die die durch die Extraktionseinheit (323) extrahierten Informationen für die Verifizierung und die durch die Verbergungseinheit (324) erzeugten verborgenen Attributinformationen an die Verifizierungsvorrichtung (400) sendet, enthält,
die Verifizierungsvorrichtung (400) eine erste Empfangseinheit, die die Informationen für die Verifizierung und die verborgenen Attributinformationen, die durch die erste Sendeeinheit gesendet werden, empfängt, die Verifizierungseinheit (400) und eine zweite Sendeeinheit, die ein Verifizierungsergebnis der Verifizierungseinheit (400) an die Verarbeitungsvorrichtung (300) sendet, enthält, und
die Verarbeitungsvorrichtung (300) eine zweite Empfangseinheit, die das durch die zweite Sendeeinheit gesendete Verifizierungsergebnis empfängt, enthält.

9. Verifizierungssystem nach wenigstens einem der vorhergehenden Ansprüche, wobei
eine Ausgabevorrichtung (100), die Zertifikatinformationen, die die Attributinformationen, die das Attribut des Benutzers angeben, und die Informationen für die Verifizierung in Bezug auf die Verifizierung der Berechtigung des Benutzers enthalten, ausgibt, eine Haltevorrichtung (200), die die Zertifikatinformationen hält, eine Verifizierungsvorrichtung (400), die die Zertifikatinformationen verifiziert, und eine Verarbeitungsvorrichtung (300), die auf der Grundlage der Zertifikatinformationen und eines Verifizierungsergebnisses der Verifizierungsvorrichtung (400) eine Verarbeitung in Bezug auf den Benutzer ausführt, kommunikationstechnisch miteinander verbunden sind,
die Haltevorrichtung (200) die Spezifizierungseinheit (322), die Extraktionseinheit (323), die Verbergungseinheit (324), eine Annahmeeinheit, die von dem Nutzer eine Anweisung, ob die durch die Extraktionseinheit (323) extrahierten Informationen für die Verifizierung und die durch die Verbergungseinheit (324) erzeugten verborgenen Attributinformationen an die Verifizierungsvorrichtung (400) gesendet werden sollen, annimmt, und eine erste Sendeeinheit, die als Reaktion auf die Annahme der Anweisung durch die Annahmeeinheit die Informationen für die Verifizierung und die verborgenen Attributinformationen an die Verifizierungsvorrichtung (400) sendet, enthält,
die Verifizierungsvorrichtung (400) eine erste Empfangseinheit, die die Informationen für die Verifizierung und die verborgenen Attributinformationen, die durch die erste Sendeeinheit gesendet werden, empfängt, die Verifizierungseinheit (400) und eine zweite Sendeeinheit, die ein Verifizierungsergebnis der Verifizierungseinheit (400) an die Verarbeitungsvorrichtung (300) sendet, enthält, und
die Verarbeitungsvorrichtung (300) eine zweite Empfangseinheit, die das durch die zweite Sendeeinheit gesendete Verifizierungsergebnis empfängt, enthält.

10. Verifizierungssystem nach wenigstens einem der vorhergehenden Ansprüche, wobei
eine Ausgabeeinheit (100), die Zertifikatinformationen, die die Attributinformationen, die das Attribut des Benutzers angeben, und die Informationen für die Verifizierung in Bezug auf die Verifizierung der Berechtigung des Benutzers enthalten, ausgibt, eine Haltevorrichtung (200), die die Zertifikatinformationen hält, eine Verifizierungsvorrichtung (400), die die Zertifikatinformationen verifiziert, und eine Verarbeitungsvorrichtung (300), die auf der Grundlage der Zertifikatinformationen und eines Verifizierungsergebnisses der Verifizierungsvorrichtung (400) eine Verarbeitung in Bezug auf den Benutzer ausführt, kommunikationstechnisch miteinander verbunden sind,
die Haltevorrichtung (200) die Spezifizierungseinheit (322), die Extraktionseinheit (323), die Verbergungseinheit (324), eine Annahmeeinheit, die von dem Benutzer eine Anweisung, ob die durch die Extraktionseinheit (323) extrahierten Informationen für die Verifizierung und die durch die Verbergungseinheit (324) erzeugten verborgenen Attributinformationen an die Verifizierungsvorrichtung (400) gesendet werden sollen, annimmt, und eine erste Sendeeinheit, die als Reaktion auf die Annahme der Anweisung durch die Annahmeeinheit die Informationen für die Verifizierung und die verborgenen Attributinformationen an die Verifizierungsvorrichtung (400) sendet, enthält,
die Verifizierungsvorrichtung (400) eine erste Empfangseinheit, die die Informationen für die Verifizierung und die verborgenen Attributinformationen, die durch die erste Sendeeinheit gesendet werden, empfängt, die Verifizierungseinheit (400) und eine zweite Sendeeinheit, die ein Verifizierungsergebnis der Verifizierungseinheit (400) an die Haltevorrichtung (200) sendet, enthält,
die Haltevorrichtung (200) eine zweite Empfangseinheit, die das durch die zweite Sendeeinheit gesendete Verifizierungsergebnis empfängt, und eine dritte Sendeeinheit, die die Zertifikatinformationen und das Verifizierungsergebnis einander zugeordnet zu der Verarbeitungsvorrichtung (300) sendet, enthält, und
die Verarbeitungsvorrichtung (300) eine dritte Empfangseinheit, die die Zertifikatinformationen und das Verifizierungsergebnis, die durch die dritte Sendeeinheit gesendet werden, empfängt, enthält.

11. Verifizierungsverfahren zum Verifizieren von Zertifikatinformationen, die Attributinformationen, die ein Attribut eines Benutzers angeben, und Informationen für die Verifizierung in Bezug auf die Verifizierung einer Berechtigung des Benutzers enthalten, wobei das Verifizierungsverfahren umfasst:
zunächst Spezifizieren eines Formats der Zertifikatinformationen mit einer Spezifizierungseinheit (322) und daraufhin Spezifizieren eines verifizierten Abschnitts, der die Informationen für die Verifizierung in den Zertifikatinformationen enthält, mit der Spezifizierungseinheit (322) und Spezifizieren eines verborgenen Abschnitts, der die Attributinformationen der Zertifikatinformationen enthält, als den vorgegebenen Abschnitt,
Extrahieren der Informationen für die Verifizierung aus den Zertifikatinformationen auf der Grundlage eines Ergebnisses der durch die Spezifizierungseinheit (322) ausgeführten Spezifizierung mit einer Extraktionseinheit (323);
Verbergen eines vorgegebenen Abschnitts, der die Attributinformationen der Zertifikatinformationen enthält, mit einer Verbergungseinheit (324), um verborgene Attributinformationen zu erzeugen; und
Ausführen einer Verifizierung auf der Grundlage der durch die Extraktionseinheit (323) extrahierten Informationen für die Verifizierung und der durch die Verbergungseinheit (324) erzeugten verborgenen Attributinformationen mit einer Verifizierungseinheit (400);
Extrahieren der Informationen für die Verifizierung aus den Zertifikatinformationen auf der Grundlage des durch die Spezifizierungseinheit (322) spezifizierten verifizierten Abschnitts mit der Extraktionseinheit (323); und
Verbergen des durch die Spezifizierungseinheit (322) spezifizierten verborgenen Abschnitts mit der Verbergungseinheit (324), um die verborgenen Attributinformationen zu erzeugen,
Speichern von Informationen, in denen Formatspezifizierungsdaten, mit denen das Format der Zertifikatinformationen spezifiziert werden kann, Informationen des verifizierten Abschnitts, die den verifizierten Abschnitt angeben, die Informationen für die Verifizierung in den Zertifikatinformationen enthalten, und Informationen des verborgenen Abschnitts, die den verborgenen Abschnitt angeben, die die Attributinformationen der Zertifikatinformationen enthalten, einander zugeordnet sind, in einer Speichereinheit,
Spezifizieren des Formats der Zertifikatinformationen auf der Grundlage der in der Speichereinheit gespeicherten Formatspezifizierungsdaten und Spezifizieren der Informationen des verifizierten Abschnitts und der Informationen des verborgenen Abschnitts, die den Formatspezifizierungsdaten des Formats, das spezifiziert worden ist, zugeordnet sind, durch die Spezifizierungseinheit (322).

## Revendications

1. Système de vérification qui vérifie des informations de certificat incluant des informations d'attribut indiquant un attribut d'un utilisateur et des informations de vérification relatives à une vérification d'une qualification de l'utilisateur, le système de vérification comprenant :
une unité de spécification (322) qui spécifie d'abord un format des informations de certificat, puis spécifie une portion vérifiée incluant les informations de vérification dans les informations de certificat, et qui spécifie une portion masquée incluant les informations d'attribut des informations de certificat comme portion prédéterminée ;
une unité d'extraction (323) qui extrait les informations de vérification à partir des informations de certificat sur la base d'un résultat de spécification effectué par l'unité de spécification (322) ;
une unité de masquage (324) qui masque une portion prédéterminée incluant les informations d'attribut des informations de certificat pour générer des informations d'attribut masquées ; et
une unité de vérification (400) qui effectue une vérification sur la base des informations de vérification extraites par l'unité d'extraction (323) et des informations d'attribut masquées générées par l'unité de masquage (324), l'unité d'extraction (323) extrait les informations de vérification à partir des informations de certificat sur la base de la portion vérifiée spécifiée par l'unité de spécification (322), et
l'unité de masquage (324) masque la portion masquée spécifiée par l'unité de spécification (322) pour générer les informations d'attribut masquées, dans lequel le système de vérification comprend en outre une unité de stockage qui stocke des informations dans lesquelles des données de spécification de format permettant de spécifier le format des informations de certificat, des informations de portion vérifiée indiquant la portion vérifiée incluant des informations de vérification dans les informations de certificat, et des informations de portion masquée indiquant la portion masquée incluant les informations d'attribut des informations de certificat, sont associées les unes aux autres, dans lequel
l'unité de spécification (322) spécifie le format des informations de certificat sur la base des données de spécification de format stockées dans l'unité de stockage, et spécifie les informations de portion vérifiée et les informations de portion masquée associées aux données de spécification de format du format qui a été spécifié.

2. Système de vérification selon l'une au moins des revendications précédentes, dans lequel
les informations de certificat incluent les informations d'attribut indiquant l'attribut de l'utilisateur et des informations de vérification relatives à une vérification d'une qualification de l'utilisateur,
les informations de vérification incluent :
des informations de vérification incluant des informations de spécification de clé publique permettant de spécifier une clé publique correspondant à une clé secrète d'un émetteur qui a émis la qualification, des informations de spécification de révocation permettant de spécifier si la qualification est révoquée, et des informations de spécification de validité permettant de spécifier une validité de la qualification ; et
une signature, réalisée avec la clé secrète de l'émetteur, dans laquelle les informations d'attribut et les informations de vérification sont masquées, et l'unité d'extraction (323) extrait les informations de spécification de clé publique, les informations de spécification de révocation, les informations de spécification de validité, et la signature à partir des informations de certificat sur la base d'un résultat de spécification effectué par l'unité de spécification (322).

3. Système de vérification selon l'une au moins des revendications précédentes, dans lequel
l'unité de masquage (324) masque une portion prédéterminée incluant les informations d'attribut des informations de certificat pour générer les informations d'attribut masquées sur la base d'un résultat de spécification effectué par l'unité de spécification (322).

4. Système de vérification selon la revendication 3, dans lequel l'unité de masquage (324) hache la portion prédéterminée incluant les informations d'attribut des informations de certificat sur la base du résultat de spécification effectué par l'unité de spécification (322) pour générer une valeur de hachage comme informations d'attribut masquées.

5. Système de vérification selon l'une au moins des revendications précédentes, dans lequel
les informations de certificat incluent les informations d'attribut indiquant l'attribut de l'utilisateur et les informations de vérification relatives à une vérification de la qualification de l'utilisateur,
les informations de vérification incluent des informations de traitement d'attribut masquées obtenues en effectuant un traitement prédéterminé sur des informations d'attribut masquées dans lesquelles une portion incluant les informations attribut est masquée, et
l'unité de vérification (400) effectue une vérification de signature sur la base des informations d'attribut masquées générées par l'unité de masquage (324) et des informations de traitement d'attribut masquées incluses dans les informations de certificat.

6. Système de vérification selon la revendication 1, dans lequel les informations de certificat incluent les informations d'attribut indiquant l'attribut de l'utilisateur et les informations de vérification relatives à une vérification de la qualification de l'utilisateur,
les informations de vérification incluent des informations de spécification de révocation permettant de spécifier si la qualification est révoquée,
l'unité d'extraction (323) extrait les informations de spécification de révocation incluses dans les informations de vérification des informations de certificat, et
l'unité de vérification (400) effectue une vérification de révocation sur la base des informations de spécification de révocation extraites par l'unité d'extraction (323).

7. Système de vérification selon une au moins des revendications précédentes, dans lequel
les informations de certificat incluent les informations d'attribut indiquant l'attribut de l'utilisateur et les informations de vérification relatives à une vérification de la qualification de l'utilisateur,
les informations de vérification incluent des informations de spécification de validité permettant de spécifier une validité de la qualification,
l'unité d'extraction (323) extrait des informations de spécification de validité incluses dans les informations de vérification des informations de certificat, et
l'unité de vérification (400) effectue une vérification de validité sur la base des informations de spécification de validité extraites par l'unité d'extraction (323).

8. Système de vérification selon une au moins des revendications précédentes, dans lequel
un dispositif d'émission (100) qui émet des informations de certificat incluant les informations d'attribut indiquant l'attribut de l'utilisateur et les informations de vérification relatives à une vérification de la qualification de l'utilisateur, un dispositif de stockage (200) qui stocke les informations de certificat, un dispositif de vérification (400) qui vérifie les informations de certificat, et un dispositif de traitement (300) qui effectue un traitement relatif à l'utilisateur sur la base des informations de certificat et d'un résultat de vérification du dispositif de vérification (400), sont connectés en communication les uns avec les autres,
le dispositif de traitement (300) inclut l'unité de spécification (322), l'unité d'extraction (323), l'unité de masquage (324), et une première unité de transmission qui transmet les informations de vérification extraites par l'unité d'extraction (323) et les informations d'attribut masquées générées par l'unité de masquage (324) au dispositif de vérification (400),
le dispositif de vérification (400) inclut une première unité de réception qui reçoit les informations de vérification et les informations d'attribut masquées transmises par la première unité de transmission, l'unité de vérification (400), et une deuxième unité de transmission qui transmet un résultat de vérification de l'unité de vérification (400) au dispositif de traitement (300), et
le dispositif de traitement (300) inclut une deuxième unité de réception qui reçoit le résultat de vérification transmis par la deuxième unité de transmission.

9. Système de vérification selon une au moins des revendications précédentes, dans lequel
un dispositif d'émission (100) qui émet des informations de certificat incluant les informations d'attribut indiquant l'attribut de l'utilisateur et les informations de vérification relatives à une vérification de la qualification de l'utilisateur, un dispositif de stockage (200) qui stocke les informations de certificat, un dispositif de vérification (400) qui vérifie les informations de certificat, et un dispositif de traitement (300) qui effectue un traitement relatif à l'utilisateur sur la base des informations de certificat et d'un résultat de vérification du dispositif de vérification (400), sont connectés en communication les avec les autres,
le dispositif de stockage (200) inclut l'unité de spécification (322), l'unité d'extraction (323), l'unité de masquage (324), une unité d'acceptation qui accepte, depuis l'utilisateur, une instruction quant à savoir s'il faut transmettre, au dispositif de vérification (400), les informations de vérification extraites par l'unité d'extraction (322) et les informations d'attribut masquées générées par l'unité de masquage (324), et une première unité de transmission qui transmet, au dispositif de vérification (400), les informations de vérification et les informations d'attribut masquées en réponse à une acceptation de l'instruction par l'unité d'acceptation,
le dispositif de vérification (400) inclut une première unité de réception qui reçoit les informations de vérification et les informations d'attribut masquées transmises par la première unité de transmission, l'unité de vérification (400), et une deuxième unité de transmission qui transmet un résultat de vérification de l'unité de vérification (400) au dispositif de traitement (300), et
le dispositif de traitement (300) inclut une deuxième unité de réception qui reçoit le résultat de vérification transmis par la deuxième unité de transmission.

10. Système de vérification selon une au moins des revendications précédentes, dans lequel
un dispositif d'émission (100) qui émet des informations de certificat incluant les informations d'attribut indiquant l'attribut de l'utilisateur et les informations de vérification relatives à une vérification de la qualification de l'utilisateur, un dispositif de stockage (200) qui stocke les informations de certificat, un dispositif de vérification (400) qui vérifie les informations de certificat, et un dispositif de traitement (300) qui effectue un traitement relatif à l'utilisateur sur la base des informations de certificat et d'un résultat de vérification du dispositif de vérification (400), sont connectés en communication les uns avec les autres,
le dispositif de stockage (200) inclut l'unité de spécification (322), l'unité d'extraction (323), l'unité de masquage (324), une unité d'acceptation qui accepte, depuis l'utilisateur, une instruction quant à savoir s'il faut transmettre, au dispositif de vérification (400), les informations de vérification extraites par l'unité d'extraction (323) et les informations d'attribut masquées générées par l'unité de masquage (324), et une première unité de transmission qui transmet, au dispositif de vérification (400), les informations de vérification et les informations d'attribut masquées en réponse à une acceptation de l'instruction par l'unité d'acceptation,
le dispositif de vérification (400) inclut une première unité de réception qui reçoit les informations de vérification et les informations d'attribut masquées transmises par la première unité de transmission, l'unité de vérification (400), et une deuxième unité de transmission qui transmet un résultat de vérification de l'unité de vérification (400) au dispositif de stockage (200), et
le dispositif de stockage (200) inclut une deuxième unité de réception qui reçoit le résultat de vérification transmis par la deuxième unité de transmission et une troisième unité de transmission qui transmet les informations de certificat et le résultat de vérification mutuellement associés, au dispositif de traitement (300), et
le dispositif de traitement (300) inclut une troisième unité de réception qui reçoit les informations de certificat et le résultat de vérification transmis par la troisième unité de transmission.

11. Procédé de vérification pour vérifier des informations de certificat incluant des informations d'attribut indiquant un attribut d'un utilisateur et des informations de vérification relatives à une vérification d'une qualification de l'utilisateur, le procédé de vérification comprenant les étapes consistant à :
spécifier d'abord, avec une unité de spécification (322), un format des informations de certificat puis spécifier, avec l'unité de spécification (322), une portion vérifiée incluant les informations de vérification dans les informations de certificat, et spécifier une portion masquée incluant les informations d'attribut des informations de certificat comme portion prédéterminée ;
extraire, avec une unité d'extraction (323), les informations de vérification à partir des informations de certificat sur la base d'un résultat de spécification effectué par l'unité de spécification (322) ;
masquer, avec unité de masquage (324), une portion prédéterminée incluant les informations d'attribut des informations de certificat pour générer des informations d'attribut masquées ; et
effectuer, avec une unité de vérification (400), une vérification sur la base des informations de vérification extraites par l'unité d'extraction (323) et des informations d'attribut masquées générées par l'unité de masquage (324) ; extraire, avec l'unité d'extraction (323), les informations de vérification à partir des informations de certificat sur la base de la portion vérifiée spécifiée par l'unité de spécification (322) ; et
masquer, avec l'unité de masquage (324), la portion masquée spécifiée par l'unité de spécification (322) pour générer les informations d'attribut masquées,
stocker, dans une unité de stockage, des informations dans lesquelles des données de spécification de format permettant de spécifier le format des informations de certificat, des informations de portion vérifiée indiquant la portion vérifiée incluant des informations de vérification dans les informations de certificat, et des informations de portion masquée indiquant la portion masquée incluant les informations d'attribut des informations de certificat, sont associées les unes aux autres,
spécifier, via l'unité de spécification (322), le format des informations de certificat sur la base des données de spécification de format stockées dans l'unité de stockage, et spécifie les informations de portion vérifiée et les informations de portion masquée associées aux données de spécification de format du format qui a été spécifié.
